# EUROPEAN PATENT APPLICATION

(11) **EP 4 447 577 A1**
(43) Date of publication of application: **16.10.2024**
(21) Application number: 23739860.7
(22) Date of filing: 04.01.2023
(51) Int. Cl.: H04W 72/00

(54) **BROADCAST COMMUNICATION METHOD AND APPARATUS**

(30) Priority: 12.01.2022 CN 202210030311
(71) Applicant: Huawei Technologies Co., Ltd., Shenzhen, Guangdong 518129 (CN)
(72) Inventor: LI, Meng, Shenzhen, Guangdong 518129 (CN); LI, Bingzhao, Shenzhen, Guangdong 518129 (CN); WANG, Yan, Shenzhen, Guangdong 518129 (CN)
(74) Representative: Körber, Martin Hans
(86) International application number: PCT/CN2023/070401
(87) International publication number: WO 2023/134516

(57) **Abstract**

Embodiments of this application provide a broadcast communication method and apparatus. An identifier of a first broadcast service is sent to a radio access network device, so that the radio access network device can identify the same first broadcast service in different networks. The radio access network device may send data of the broadcast service in a first network by using a resource that has been allocated to the first broadcast service in a second network. In other words, in this application, the radio access network device may share an air interface resource for a same broadcast service in different networks, so as to save transmission resources of the radio access network device and avoid a waste of air interface resources.

## Description

This application claims priority to Chinese Patent Application No. 202210030311.7, filed with the China National Intellectual Property Administration on January 12, 2022 and entitled "BROADCAST COMMUNICATION METHOD AND APPARATUS", which is incorporated herein by reference in its entirety.

### TECHNICAL FIELD

This application relates to the communication field, and more specifically, to a broadcast communication method and apparatus.

### BACKGROUND

Currently, when deploying a network, to reduce costs, different operators share a base station, but retain their respective core networks, for example, a multi-operator core network (multi-operator core network, MOCN) scenario. In the MOCN scenario, a broadcast message includes information about a public land mobile network (public land mobile network, PLMN). For example, the base station broadcasts information about a cell, where the information includes information about a PLMN to which the cell belongs.

However, in the foregoing scenario in which different operators share a base station, there is a case in which the core networks of the operators and the base station shared by the operators repeatedly transmit some broadcast services (for example, weather forecast and high-definition map update), causing a waste of transmission resources. How to reduce the waste of transmission resources becomes an urgent problem to be resolved.

### SUMMARY

This application provides a broadcast communication method, to reduce a waste of transmission resources.

According to a first aspect, a broadcast communication method is provided. The method may be performed by a radio access network device (for example, a base station), or may be performed by a component (for example, a chip or a circuit) of the radio access network device. This is not limited herein.

The method includes: A radio access network device receives a first message from a first access and mobility management function network element, where the first message carries an identifier of a first broadcast service, the first message is used for triggering allocation of a resource to the first broadcast service, the radio access network device is shared by at least two networks, the at least two networks include a first network and a second network, and the first access and mobility management function network element is located in the first network; the radio access network device obtains, based on the identifier of the first broadcast service, information about a first resource corresponding to the first broadcast service, where the first resource is used for sending data of the first broadcast service to a terminal device in the second network; and the radio access network device sends the data of the first broadcast service to a terminal device in the first network by using the first resource.

Based on the foregoing technical solution, in a scenario in which the radio access network device has allocated a resource to the first broadcast service in the second network and established a broadcast session context corresponding to the first broadcast service, in this application, the identifier of the first broadcast service is sent to the radio access network device, so that the radio access network device can identify the same broadcast service in different networks. The radio access network device may send the data of the broadcast service in the first network by using the resource that has been allocated to the broadcast service in the second network. In other words, in this application, the radio access network device may share an air interface resource for a same broadcast service in different networks, so as to save transmission resources of the radio access network device and avoid a waste of air interface resources.

In this application, the first resource may be used for sending the data of the first broadcast service to the terminal device in the second network. For example, the first resource may be one or more of an air interface resource, for example, a scheduling time resource, a frequency resource, a scheduling priority, a buffer resource, a data radio bearer (data radio bearer, DRB), and stored context information (for example, quality of service (quality of service, QoS) description information and QoS flow (flow) identification information). This is not limited.

In this application, the information about the first resource may be, for example, identification information (for example, a context identifier (context ID)) of the first resource or information such as time domain and frequency domain positions of the first resource. This is not limited.

In an implementation, the identifier of the first broadcast service includes a first identifier and/or a second identifier, and the first identifier includes at least one of the following: a globally unique identifier of the first broadcast service; an identifier of the first broadcast service in each of the at least two networks; or a temporary mobile group identity of the first broadcast service, where the temporary mobile group identity is shared by the at least two networks; and the second identifier includes an identifier of the first broadcast service in the first network.

For example, the identifier of the first broadcast service may include the globally unique identifier of the first broadcast service and the identifier of the first broadcast service in the first network. For another example, the identifier of the first broadcast service may include the identifier of the first broadcast service in each of the at least two networks and the temporary mobile group identity of the first broadcast service. For another example, the identifier of the first broadcast service may include the globally unique identifier of the first broadcast service, the temporary mobile group identity of the first broadcast service, and the identifier of the first broadcast service in the first network.

In an implementation, the globally unique identifier of the first broadcast service includes an internet protocol IP multicast address of the first broadcast service. It should be noted that the globally unique identifier of the first broadcast service may be the internet protocol IP multicast address of the first broadcast service, or may include other content, for example, a source address (source address) of multicast/broadcast data. This is not limited in this application.

The IP multicast address, for example, may be one or more IP addresses in address segments 224.3.0.0 to 224.4.255.255, or 225.0.0.0 to 231.255.255.255, or 232.0.0.0 to 232.255.255.255, or 233.0.0.0 to 233.251.255.255 for internet protocol version 4 (internet protocol version 4, IPv4); or may be one or more IP addresses with a prefix of ff02, ff05, or ff0x for internet protocol version 6 (internet protocol version 6, IPv6). This is not limited in this application.

It should be noted that, in this application, when the identifier of the first broadcast service is the globally unique identifier of the first broadcast service, for example, a new information element may be added to a request message sent by an application function network element to a PLMN network. In other words, the globally unique identifier of the first broadcast service is added to the request message sent by the application function network element to the PLMN network for implementation. This manner makes a small change to an application server, is easily implemented by the application server, and is easily promoted. When the identifier of the first broadcast service is the identifier of the first broadcast service in each of the at least two networks, an information element in the existing message sent by the access and mobility management network element to the access network device may be extended. In other words, an original identifier of the first broadcast service in a network is extended to the identifier of the first broadcast service in each of the at least two networks, to implement a new function. This requires a small change to the network, and is easy to upgrade.

In an implementation, when the identifier of the first broadcast service is the globally unique identifier of the first broadcast service, that the radio access network device obtains, based on the identifier of the first broadcast service, information about a first resource corresponding to the first broadcast service includes: The radio access network device searches, based on the globally unique identifier of the first broadcast service, for the broadcast session context corresponding to the first broadcast service; and the radio access network device obtains the information about the first resource based on the broadcast session context, where the broadcast session context includes the globally unique identifier of the first broadcast service and the information about the first resource.

In an implementation, when the identifier of the first broadcast service is the identifier of the first broadcast service in each of the at least two networks, that the radio access network device obtains, based on the identifier of the first broadcast service, information about a first resource corresponding to the first broadcast service includes: The radio access network device searches, based on the identifier of the first broadcast service in each of the at least two networks, for the broadcast session context corresponding to the first broadcast service; and the radio access network device obtains the information about the first resource based on the broadcast session context, where the broadcast session context includes the identifier of the first broadcast service in each of the at least two networks and the information about the first resource.

In an implementation, when the identifier of the first broadcast service includes the second identifier, that the radio access network device obtains, based on the identifier of the first broadcast service, information about a first resource corresponding to the first broadcast service includes: The radio access network device obtains an identifier of the first broadcast service in the second network based on the second identifier and a pre-configured correspondence between the identifier of the first broadcast service in the first network and the identifier of the first broadcast service in the second network; the radio access network device searches, based on the identifier of the first broadcast service in the second network, for a broadcast session context corresponding to the first broadcast service; and the radio access network device obtains the information about the first resource based on the broadcast session context, where the broadcast session context includes the second identifier and the information about the first resource.

In an implementation, when the identifier of the first broadcast service is the temporary mobile group identity of the first broadcast service, because a temporary mobile group identity that is of the first broadcast service and that is received by the radio access network device in the second network is shared with a temporary mobile group identity that is of the first broadcast service and that is received by the radio access network device in the first network (for example, the temporary mobile group identities are the same), the radio access network device may send the data of the first broadcast service in the first network by using the first resource in the second network. In other words, in this case, the radio access network device may send the data of the first broadcast service to the terminal device in the first network by using the first resource without searching for the context corresponding to the first broadcast service and searching for the information about the first resource.

Based on the foregoing technical solution, in this application, the broadcast session context corresponding to the first broadcast service has been established in the second network, and the broadcast session context includes the identifier of the first broadcast service and the information about the first resource. Therefore, the radio access network device may obtain, based on the identifier of the first broadcast service, the information about the first resource that has been allocated to the first broadcast service in the second network. The radio access network device may subsequently send the data of the first broadcast service to the terminal device in the first network by using the first resource.

For a scenario in which the radio access network device has not established, in a network, a broadcast session context corresponding to the first broadcast service, the method further includes: When the identifier of the first broadcast service includes the first identifier, the method further includes: The radio access network device receives a second message from a second access and mobility management function network element, where the second message carries the first identifier, the second message is used for triggering allocation of a resource to the first broadcast service, and the second access and mobility management function network element is located in the second network in the at least two networks; the radio access network device allocates the first resource to the first broadcast service based on the second message; and the radio access network device establishes the broadcast session context corresponding to the first broadcast service, where the broadcast session context includes the first identifier and the information about the first resource.

Based on the foregoing technical solution, in this application, if a resource has not been allocated to the first broadcast service and a broadcast session corresponding to the first broadcast service has not been established in a network, the radio access network device may allocate the resource to the first broadcast service and establish a session context of the first broadcast service in the second network. Subsequently, the radio access network device may not distinguish between networks, but depending on whether a resource has been allocated to the broadcast service locally, so as to flexibly use (or may be understood as "share") the resource.

According to a second aspect, a broadcast communication method is provided. The method may be performed by a multicast/broadcast session management function network element, or may be performed by a component (for example, a chip or a circuit) of the multicast/broadcast session management function network element. This is not limited herein.

The method includes: A multicast/broadcast session management function network element receives an identifier of a first broadcast service; and the multicast/broadcast session management function network element sends the identifier of the first broadcast service to an access and mobility management function network element.

Based on the foregoing technical solution, in this application, the multicast/broadcast session management function network element may receive the identifier of the first broadcast service, and send the identifier of the first broadcast service to the access and mobility management function network element, so that a radio access network device can obtain the identifier of the first broadcast service, and identify same broadcast data in different networks.

In an implementation, the identifier of the first broadcast service includes a first identifier, and the first identifier includes at least one of the following: a globally unique identifier of the first broadcast service; an identifier of the first broadcast service in each of at least two networks; or a temporary mobile group identity of the first broadcast service, where the temporary mobile group identity is shared by at least two networks.

In an implementation, the globally unique identifier of the first broadcast service includes an internet protocol IP multicast address of the first broadcast service. It should be noted that the globally unique identifier of the first broadcast service may be the internet protocol IP multicast address of the first broadcast service, or may include other content, for example, a source address (source address) of multicast/broadcast data. This is not limited in this application.

The IP multicast address, for example, may be one or more IP addresses in address segments 224.3.0.0 to 224.4.255.255, or 225.0.0.0 to 231.255.255.255, or 232.0.0.0 to 232.255.255.255, or 233.0.0.0 to 233.251.255.255 for internet protocol version 4 (internet protocol version 4, IPv4); or may be one or more IP addresses with a prefix of ff02, ff05, or ff0x for internet protocol version 6 (internet protocol version 6, IPv6). This is not limited in this application.

It should be noted that, in this application, when the identifier of the first broadcast service is the globally unique identifier of the first broadcast service, for example, a new information element may be added to a request message sent by an application function network element to a PLMN network. In other words, the globally unique identifier of the first broadcast service is added to the request message sent by the application function network element to the PLMN network for implementation. This manner makes a small change to an application server, is easily implemented by the application server, and is easily promoted. When the identifier of the first broadcast service is the identifier of the first broadcast service in each of the at least two networks, an information element in the existing message sent by the access and mobility management network element to the access network device may be extended. In other words, an original identifier of the first broadcast service in a network is extended to the identifier of the first broadcast service in each of the at least two networks, to implement a new function. This requires a small change to the network, and is easy to upgrade.

In addition, in this application, for different representation forms of the identifier of the first broadcast service, the radio access network device may flexibly identify the different representation forms of the identifier of the first broadcast service as the same broadcast service.

In an implementation, that a multicast/broadcast session management function network element receives an identifier of a first broadcast service includes: The multicast/broadcast session management function network element receives the identifier of the first broadcast service from the application function network element.

In an implementation, that a multicast/broadcast session management function network element receives an identifier of a first broadcast service includes: The multicast/broadcast session management function network element receives the identifier of the first broadcast service from a multicast/broadcast user plane function network element, where the identifier of the first broadcast service is the globally unique identifier of the first broadcast service.

Based on the foregoing technical solution, in this application, the multicast/broadcast session management function network element may receive the identifier of the first broadcast service from the application function network element, or may receive the identifier of the first broadcast service from the multicast/broadcast user plane function network element; in other words, flexibly receive the identifier of the first broadcast service from each core network element. Therefore, the radio access network device can subsequently identify the same broadcast service in different networks based on the identifier of the broadcast service received from different core network elements.

In an implementation, before that the multicast/broadcast session management function network element receives the identifier of the first broadcast service from the application function network element, the method further includes: The multicast/broadcast session management function network element receives a third message from the application function network element, where the third message carries the identifier of the first broadcast service, and the third message is used for triggering the multicast/broadcast session management function network element to send the temporary mobile group identity of the first broadcast service to the application function network element; the multicast/broadcast session management function network element obtains the temporary mobile group identity from a first network element based on the third message; or the multicast/broadcast session management function network element allocates the temporary mobile group identity to the first broadcast service based on the third message; and the multicast/broadcast session management function network element sends the temporary mobile group identity to the application function network element.

Based on the foregoing technical solution, in this application, if the identifier of the first broadcast service is the temporary mobile group identity, the multicast/broadcast session management function network element may obtain the temporary mobile group identity from the first network element or independently allocate the temporary mobile group identity to the first broadcast service, so as to ensure that the same temporary mobile group identity is used for the same broadcast service.

In an implementation, the first network element is a unified data management network element, a unified data storage network element, a network repository function network element, a network discovery function network element, a policy control function network element, or a multicast/broadcast database, where the multicast/broadcast database is shared by at least two networks.

The first network element in this application may be a network element in an existing 5G core network architecture, or may be a new network element defined in the future. That is, a specific name of the first network element is not limited. Provided that the temporary mobile group identity of the first broadcast service may be obtained from the network element, and the temporary mobile group identity may be shared by at least two networks, the network element falls within the protection scope of this application.

In an implementation, before that the multicast/broadcast session management function network element receives the identifier of the first broadcast service from a multicast/broadcast user plane function network element, the method further includes: The multicast/broadcast session management function network element sends a fourth message to the multicast/broadcast user plane function network element, where the fourth message requests establishment or modification of a session of the first broadcast service, the fourth message carries first indication information, and the first indication information is used for triggering the multicast/broadcast user plane function network element to detect the identifier of the first broadcast service.

Based on the foregoing technical solution, the identifier of the first broadcast service may be obtained by using a method for indicating the multicast/broadcast user plane function network element to detect the identifier of the first broadcast service, so that flexibility of obtaining the identifier of the first broadcast service can be improved. In addition, in the technical solution, the identifier of the first broadcast service may be obtained without depending on the application function network element. It may also be understood that the technical solution may also be implemented when a function of the application function network element is not enhanced.

According to a third aspect, a broadcast communication method is provided. The method may be performed by an application function network element, or may be performed by a component (for example, a chip or a circuit) of the application function network element. This is not limited herein.

The method includes: The application function network element obtains an identifier of a first broadcast service; and the application function network element sends the identifier of the first broadcast service to a multicast/broadcast session management function network element.

In an implementation, the identifier of the first broadcast service includes a first identifier, and the first identifier includes at least one of the following: a globally unique identifier of the first broadcast service; an identifier of the first broadcast service in each of at least two networks; or a temporary mobile group identity of the first broadcast service, where the temporary mobile group identity is shared by at least two networks.

In an implementation, the globally unique identifier of the first broadcast service includes an internet protocol IP multicast address of the first broadcast service. It should be noted that the globally unique identifier of the first broadcast service may be the internet protocol IP multicast address of the first broadcast service, or may include other content, for example, a source address (source address) of multicast/broadcast data. This is not limited in this application.

The IP multicast address, for example, may be one or more IP addresses in address segments 224.3.0.0 to 224.4.255.255, or 225.0.0.0 to 231.255.255.255, or 232.0.0.0 to 232.255.255.255, or 233.0.0.0 to 233.251.255.255 for internet protocol version 4 (internet protocol version 4, IPv4); or may be one or more IP addresses with a prefix of ff02, ff05, or ff0x for internet protocol version 6 (internet protocol version 6, IPv6). This is not limited in this application.

It should be noted that, in this application, when the identifier of the first broadcast service is the globally unique identifier of the first broadcast service, for example, a new information element may be added to a request message sent by an application function network element to a PLMN network. In other words, the globally unique identifier of the first broadcast service is added to the request message sent by the application function network element to the PLMN network for implementation. This manner makes a small change to an application server, is easily implemented by the application server, and is easily promoted. When the identifier of the first broadcast service is the identifier of the first broadcast service in each of the at least two networks, an information element in the existing message sent by the access and mobility management network element to the access network device may be extended. In other words, an original identifier of the first broadcast service in a network is extended to the identifier of the first broadcast service in each of the at least two networks, to implement a new function. This requires a small change to the network, and is easy to upgrade.

In addition, in this application, for different representation forms of the identifier of the first broadcast service, the radio access network device may flexibly identify the different representation forms of the identifier of the first broadcast service as the same broadcast service.

In an implementation, that the application function network element obtains an identifier of a first broadcast service includes: The application function network element generates the globally unique identifier of the first broadcast service.

In an implementation, the at least two networks include a first network and a second network, and that the application function network element obtains an identifier of a first broadcast service includes: The application function network element receives an identifier of the first broadcast service in the first network from a first multicast/broadcast session management function network element in the first network; and the application function network element receives an identifier of the first broadcast service in the second network from a second multicast/broadcast session management function network element in the second network.

In an implementation, that the application function network element obtains an identifier of a first broadcast service includes: The application function network element obtains the temporary mobile group identity from the multicast/broadcast session management function network element.

Based on the foregoing technical solution, in this application, when the identifier of the first broadcast service is represented in different forms, the application function network element may obtain the identifier of the first broadcast service by using different methods.

According to a fourth aspect, this application provides a broadcast communication method. The method may be performed by a first network element, or may be performed by a component (for example, a chip or a circuit) of the first network element. This is not limited herein.

The method includes: The first network element receives a fifth message from a multicast/broadcast session management function network element, where the fifth message carries an identifier of a first broadcast service, and the fifth message is used for triggering the first network element to send a temporary mobile group identity of the first broadcast service; and the first network element sends the temporary mobile group identity of the first broadcast service to the multicast/broadcast session management function network element based on the fifth message.

In an implementation, the temporary mobile group identity is shared by at least two networks.

Based on the foregoing technical solution, in this application, when the identifier of the first broadcast service is the temporary mobile group identity, the temporary mobile group identity may be obtained from the first network element.

In an implementation, the first network element is a unified data management network element, a unified data storage network element, a network repository function network element, a network discovery function network element, a policy control function network element, or a multicast/broadcast database, where the multicast/broadcast database is shared by at least two networks.

The first network element in this application may be a network element in an existing 5G core network architecture, or may be a new network element defined in the future. That is, a specific name of the first network element is not limited. Provided that the temporary mobile group identity of the first broadcast service may be obtained from the network element, and the temporary mobile group identity may be shared by at least two networks, the network element falls within the protection scope of this application.

In an implementation, the method further includes: The first network element receives a correspondence between the identifier of the first broadcast service and the temporary mobile group identity from the multicast/broadcast session management function network element.

Based on the foregoing technical solution, in this application, for the first broadcast service in some networks, if the first network element has not allocated a temporary mobile group identity to the first broadcast service, in this case, the multicast/broadcast session management function network element may allocate the temporary mobile group identity to the first broadcast service in the network, and store the temporary mobile group identity in the first network element.

According to a fifth aspect, a broadcast communication apparatus is provided. The apparatus is configured to perform the method in any possible implementation of the first aspect to the fourth aspect. Specifically, the apparatus may include a unit and/or a module configured to perform the method in any possible implementation of the first aspect to the fourth aspect, for example, a transceiver unit and/or a processing unit.

In an implementation, the apparatus is a communication device (for example, a radio access network device, a multicast/broadcast session management function network element, an application function network element, or a first network element). When the apparatus is the communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used for a communication device (for example, a radio access network device, a multicast/broadcast session management function network element, an application function network element, or a first network element). When the apparatus is the chip, the chip system, or the circuit used for the communication device, a communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a broadcast communication apparatus is provided. The apparatus includes at least one processor, configured to execute a computer program or instructions stored in a memory, to perform the method in any possible implementation of the first aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a radio access network device.

In another implementation, the apparatus is a chip, a chip system, or a circuit used for a radio access network device.

According to a seventh aspect, a broadcast communication apparatus is provided. The apparatus includes at least one processor, configured to execute a computer program or instructions stored in a memory, to perform the method in any possible implementation of the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a multicast/broadcast session management function network element.

In another implementation, the apparatus is a chip, a chip system, or a circuit used for a multicast/broadcast session management function network element.

According to an eighth aspect, a broadcast communication apparatus is provided. The apparatus includes at least one processor, configured to execute a computer program or instructions stored in a memory, to perform the method in any possible implementation of the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is an application function network element.

In another implementation, the apparatus is a chip, a chip system, or a circuit used for an application function network element.

According to a ninth aspect, a broadcast communication apparatus is provided. The apparatus includes at least one processor, configured to execute a computer program or instructions stored in a memory, to perform the method in any possible implementation of the fourth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a first network element.

In another implementation, the apparatus is a chip, a chip system, or a circuit used for a first network element.

According to a tenth aspect, this application provides a processor, including an input circuit, an output circuit, and a processing circuit. The processing circuit is configured to: receive a signal through the input circuit; and transmit a signal through the output circuit, so that the processor performs the method in any possible implementation of any one of the first aspect to the fourth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the circuits are not limited in embodiments of this application.

Unless otherwise specified, or if the operations such as sending and obtaining/receiving related to the processor do not conflict with actual functions or internal logic of the processor in related descriptions, the operations may be understood as operations such as outputting, receiving, and inputting of the processor, or may be understood as sending and receiving operations performed by a radio frequency circuit and an antenna. This is not limited in this application.

According to an eleventh aspect, a processing device is provided. The processing device includes a processor and a memory. The processor is configured to read instructions stored in the memory, receive a signal through a transceiver, and transmit a signal through a transmitter, to perform the method in any possible implementation of any one of the first aspect to the fourth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed on different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as transceivers.

The processing device in the eleventh aspect may be one or more chips. The processor in the processing device may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a twelfth aspect, a computer-readable storage medium is provided. The computer-readable storage medium stores program code to be executed by a device, and the program code is used for performing the method in any possible implementation of the first aspect to the fourth aspect.

According to a thirteenth aspect, a computer program product including instructions is provided. When the computer program product runs on a computer, the computer is enabled to perform the method in any possible implementation of the first aspect to the fourth aspect.

According to a fourteenth aspect, a chip system is provided. The chip system includes a processor, configured to invoke a computer program from a memory and run the computer program, so that a device installed with the chip system performs the method in the implementations of any one of the first aspect to the fourth aspect

According to a fifteenth aspect, a broadcast communication system is provided. The communication system includes a radio access network device and a first access and mobility management function network element. The radio access network device is configured to perform the method in any implementation of the first aspect. The first access and mobility management function network element is configured to send a first message to the radio access network device, where the first message carries an identifier of a first broadcast service, and the first message is used for triggering allocation of a resource to the first broadcast service. The radio access network device is shared by at least two networks, the at least two networks include a first network and a second network, and the first access and mobility management function network element is located in the first network.

In an implementation, the communication system further includes a multicast/broadcast session management function network element, and the multicast/broadcast session management function network element is configured to perform the method in any implementation of the second aspect.

In an implementation, the communication system further includes an application function network element, and the application function network element is configured to perform the method in any implementation of the third aspect.

In an implementation, the communication system further includes a first network element, and the first network element is configured to perform the method in any implementation of the fourth aspect.

### BRIEF DESCRIPTION OF DRAWINGS

FIG. 1 is a schematic diagram of a network architecture applicable to this application;
FIG. 2 is a schematic diagram of a scenario applicable to this application;
FIG. 3 is a schematic diagram of another scenario applicable to this application;
FIG. 4 is a schematic flowchart of a broadcast communication method 100 according to this application;
FIG. 5 is a schematic flowchart of a broadcast communication method 200 according to this application;
FIG. 6 is a schematic flowchart of a broadcast communication method 300 according to this application;
FIG. 7 is a schematic flowchart of a broadcast communication method 400 according to this application;
FIG. 8A and FIG. 8B are a schematic flowchart of a broadcast communication method 500 according to this application;
FIG. 9A, FIG. 9B, and FIG. 9C are a schematic flowchart of a broadcast communication method 600 according to this application;
FIG. 10A and FIG. 10B are a schematic flowchart of a broadcast communication method 700 according to this application;
FIG. 11A, FIG. 11B, and FIG. 11C are a schematic flowchart of a broadcast communication method 800 according to this application;
FIG. 12 is a schematic block diagram of a broadcast communication apparatus 100 according to this application; and
FIG. 13 is a schematic block diagram of a broadcast communication apparatus 200 according to this application.

### DESCRIPTION OF EMBODIMENTS

The following describes technical solutions in embodiments of this application with reference to the accompanying drawings.

A wireless communication system mentioned in this application includes but is not limited to: a global system for mobile communications (global system for mobile communications, GSM) system, a long term evolution (long term evolution, LTE) frequency division duplex (frequency division duplex, FDD) system, an LTE time division duplex (time division duplex, TDD) system, an LTE system, a long term evolution-advanced (LTE-Advanced, LTE-A) system, a next-generation communication system (for example, a 6G communication system), a system integrating a plurality of access systems, or an evolved system.

The technical solutions provided in this application may further be applied to machine type communication (machine type communication, MTC), long term evolution-machine (long term evolution-machine, LTE-M), a device to device (device to device, D2D) network, a machine to machine (machine to machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

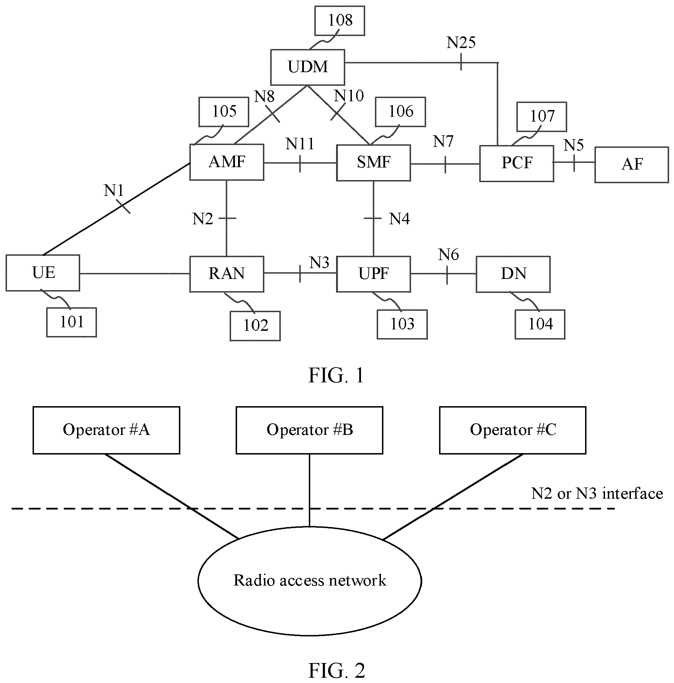

A network architecture applicable to this application is first briefly described. For example, FIG. 1 is a schematic diagram of a network architecture applicable to this application.

As shown in FIG. 1, a 5G system (5th generation system, 5GS) is used as an example of the network architecture. An architecture of the 5G system is divided into two parts: an access network and a core network. The network architecture may include but is not limited to: a unified data management (unified data management, UDM), a network exposure function (network exposure function, NEF), a network repository function (network repository function, NRF), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN). The DN may be the Internet. The UDM, NEF, NRF, PCF, AF, AMF, SMF and UPF are network elements in the core network. Because the 5G system is used as an example in FIG. 1, the core network may be referred to as a 5G core network (5G core network, 5GC or 5GCN).

The following briefly describes the network elements shown in FIG. 1.
1. User equipment (user equipment, UE) (101) may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a voice/data for a user, for example, a handheld device having a wireless connection function or a vehicle-mounted device. Currently, some examples of the terminal are a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote surgery (remote surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a terminal device in a 5G network, or a terminal device in a future evolved public land mobile network (public land mobile network, PLMN). This is not limited in embodiments of this application.

By way of example rather than limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn or integrated into clothes or an accessory of a user. The wearable device is not merely a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things.

It should be noted that the terminal device and an access network device communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement a function of a terminal device may be a terminal device, or may be an apparatus, for example, a chip system or a chip, that can support the terminal device in implementing the function. The apparatus may be mounted in the terminal device. In embodiments of this application, the chip system may include a chip; or may include a chip and another discrete component.

2. A (radio) access network ((radio) access network, (R)AN) device (102) may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The RAN device may use different radio access technologies. Currently, there are two types of radio access technologies: a 3GPP access technology (for example, a radio access technology used in a 3rd generation (3rd generation, 3G), 4th generation (4th generation, 4G), or 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), code division multiple access (code division multiple access, CDMA), and the like. The AN device may allow interconnection and interworking between a terminal device and a 3GPP core network by using a non-3GPP technology.

The RAN device can be responsible for functions on an air interface side, such as radio resource management, quality of service (quality of service, QoS) management, and data compression and encryption. The AN device provides an access service for the terminal device, to forward a control signal and user data between the terminal device and the core network.

The RAN device may include, for example, but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), a transmission reception point (transmission reception point, TRP), or the like. Alternatively, the RAN device may be a gNB or a transmission point (TRP or TP) in a 5G system such as an NR system, may be one antenna panel or a group (including a plurality of antenna panels) of antenna panels of a gNB in a 5G system, or may be a network node, for example, a distributed unit (distributed unit, DU), that constitute a gNB or a transmission point, or a base station in a next-generation communication 6G system. A specific technology and a specific device form that are used for the AN device are not limited in embodiments of this application.

3. A user plane function (user plane function, UPF) network element (103) may be configured to perform packet routing and forwarding, quality of service (quality of service, QoS) processing of user plane data, or the like. User data may be accessed to a data network (data network, DN) through this network element. In embodiments of this application, the UPF network element may be configured to implement a function of a user plane network element.

A multicast/broadcast (multicast/broadcast, MB) UPF in this application may be configured to send an internet protocol (internet protocol, IP) address of a detected multicast/broadcast service to an MB-SMF.

4. A data network (data network, DN) 104 is configured to provide a network for data transmission, for example, an operator service network, the Internet (Internet), or a third-party service network.

5. An access and mobility management function (access and mobility management function, AMF) network element (105) is mainly used for mobility management, access management, and the like, and may be configured to implement a function other than session management in functions of a mobility management entity (mobility management entity, MME) function, for example, a function such as lawful interception or access authorization (or authentication). In embodiments of this application, the AMF network element may be configured to implement a function of the access and mobility management function network element.

6. A session management function (session management function, SMF) network element (106) is mainly configured to: manage a session; assign and manage an IP address of the terminal device; select a termination point that can manage a user plane function and a policy control or charging function interface; notify downlink data; and so on. In embodiments of this application, the SMF network element may be configured to implement a function of a session management network element.

The MB-SMF in this application may be configured to manage a multicast/broadcast service; or may configure an MB-UPF for a multicast/broadcast service. For example, the MB-SMF may indicate, by exchanging signaling with the MB-UPF, the MB-UPF to identify an IP address of MBS data. In addition, the MB-SMF may need to enhance a message sent to a RAN, for the RAN to identify a same multicast/broadcast service. In this application, an SMF for multicast/broadcast management may be different from an SMF for unicast management, and an N16 interface may be between the unicast SMF and the multicast SMF.

7. A policy control function (policy control function, PCF) network element (107) is a unified policy framework used for guiding network behavior, and provides policy rule information and the like for a control plane function network element (for example, an AMF or SMF network element).

8. A unified data management (unified data management, UDM) network element (108) is used for unified data management, 5G user data management, user identifier processing, access authentication, registration, mobility management, or the like.

9. An application function (application function, AF) network element is configured to perform application-affected data routing, access a network exposure function network element, or interact with a policy framework to perform policy control, or the like. In this application, the AF may also be understood as an application server.

In the network architecture shown in FIG. 1, network elements may communicate with each other through interfaces shown in the figure. As shown in the figure, an N1 interface is a reference point between the terminal device and the AMF; an N2 interface is a reference point between the RAN and the AMF, and is configured to send a non-access stratum (non-access stratum, NAS) message and the like; an N3 interface is a reference point between the RAN and the UPF, and is configured to transmit user plane data and the like; an N4 interface is a reference point between the SMF and the UPF, and is configured to transmit information such as tunnel identification information of an N3 connection, data buffer indication information, and a downlink data notification message; an N5 interface is a reference point between the PCF and the AF; an N6 interface is a reference point between the UPF and the DN, and is used to transmit user plane data and the like; an N7 interface is a reference point between the SMF and the PCF; an N8 interface is a reference point between the AMF and the UDM; and an N11 interface is a reference point between the AMF and the SMF. Relationships between other interfaces and network elements are shown in FIG. 1. For brevity, details are not described herein.

It should be understood that the network architecture shown in FIG. 1 is merely an example for description, and the network architecture applicable to embodiments of this application is not limited thereto. Any network architecture that can implement the functions of the foregoing network elements is applicable to embodiments of this application.

It should be further understood that functions or network elements such as the AMF, the SMF, the UPF, the PCF, and the UDM shown in FIG. 1 may be understood as network elements configured to implement different functions. For example, the functions or network elements may be combined into a network slice as required. The network elements may be independent devices, may be integrated into a same device to implement different functions, may be network elements in a hardware device, may be a software function running on dedicated hardware, or may be an instantiated virtualization function on a platform (for example, a cloud platform). A specific form of the network element is not limited in this application.

It should be further understood that the foregoing names are defined merely for distinguishing between different functions, and should not constitute any limitation on this application. This application does not exclude a possibility of using other names in a 6G network and another future network. For example, in the 6G network, some or all of the foregoing network elements may still use the terms in 5G, or may use other names.

For ease of understanding the technical solutions of this application, the following briefly describes terms used in this application.
1. Multicast: A same service and same specific-content data are simultaneously provided to a group of dedicated UEs (in other words, not all UEs in multicast coverage are authorized to receive data). "Multicast" in this application may also be understood as "groupcast".
2. Broadcast: Same specific-content data is provided to all UEs in a geographic area (in other words, all the UEs in the broadcast coverage area are authorized to receive data).
3. Multicast/broadcast service session (multicast/broadcast service session, MBS session): A multicast/broadcast session can provide a service for a multicast/broadcast service. A multicast/broadcast session includes a unicast or multicast tunnel from a data network to a core network device and then to an access network device, and a unicast or multicast/broadcast air interface resource that is allocated by the access network device and that is used for sending a multicast/broadcast service.

FIG. 2 is a schematic diagram of a scenario applicable to this application. Generally, when deploying a network, to reduce costs of deploying a radio access network, an operator generally chooses to share a radio access network device while retaining a respective core network (in the following descriptions, a base station is used as a radio access network device for description). For example, the scenario is a multi-operator core network (multi-operator core network, MOCN) scenario defined in TS 23.501. As shown in FIG. 2, it is assumed that there are three operators, and each of an operator #A, an operator #B, and an operator #C has a core network. However, to reduce costs (for example, costs of deploying a base station), the three operators may share a base station. In comparison with a common scenario, in a deployment manner of the MOCN scenario, a broadcast message includes information about a public land mobile network (public land mobile network, PLMN). For example, cell information sent by the base station includes information about a PLMN to which a cell belongs.

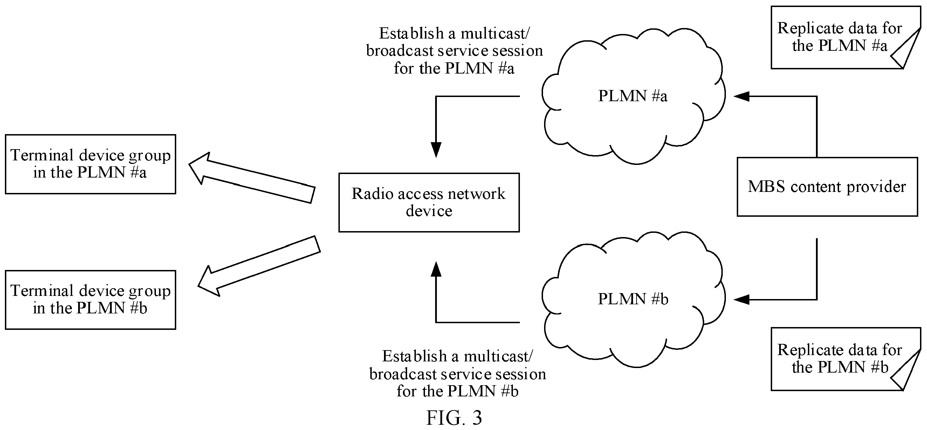

FIG. 3 is a schematic diagram of another scenario applicable to this application. As shown in FIG. 3, currently, for some broadcast services (for example, weather forecast and high-definition map update), same content is transmitted on different operators. For this type of broadcast service, data of a same broadcast service needs to be transmitted for a plurality of times on core networks of different operators and a base station shared by the operators. For example, as shown in FIG. 3, it is assumed that there are two operators (denoted as a PLMN #a and a PLMN #b), and a content provider of a multicast/broadcast service (MBS content provider) separately sends broadcast data to the PLMN #a and the PLMN #b. Because the PLMN #a and the PLMN #b share a base station, data of a same broadcast service is sent twice in the base station (which may also be understood as that the base station needs to allocate an air interface resource twice to transmit the same broadcast service in different operator networks), a waste of transmission resources is caused.

The following describes in detail a broadcast communication method provided in embodiments of this application with reference to the accompanying drawings. Embodiments provided in this application may be applied to the network architecture shown in FIG. 1, or may be applied to the scenario shown in FIG. 2 or FIG. 3. This is not limited.

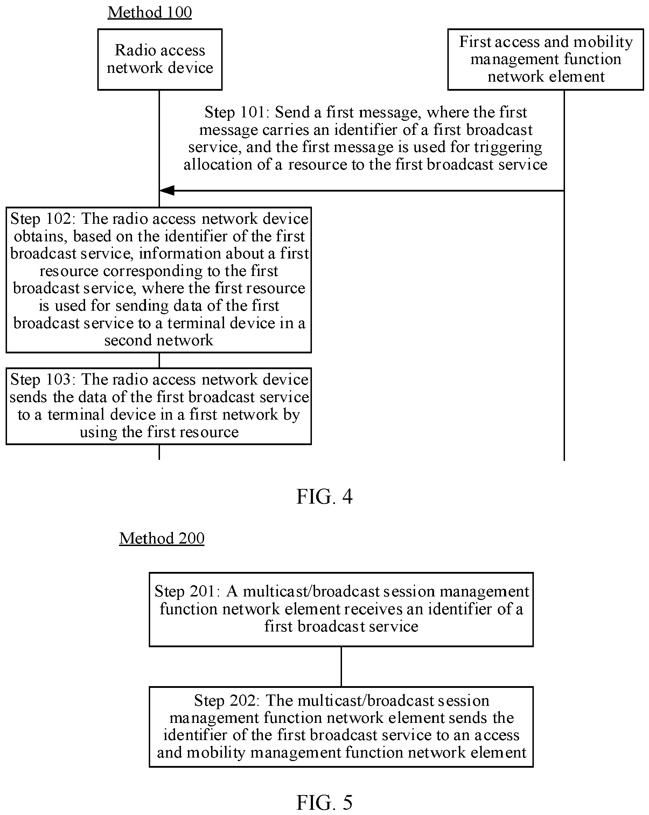

FIG. 4 is a schematic diagram of a broadcast communication method 100 according to this application. For example, the method may be performed by a radio access network device. The method 100 includes the following steps.

Step 101: The radio access network device receives a first message from a first access and mobility management function network element.

The radio access network device may be shared by at least two networks, and the at least two networks may be at a granularity of a PLMN, or may be at a granularity of a standalone non-public network (standalone non-public network, SNPN). For example, the at least two networks may include a first network and a second network, where the first network may be a PLMN #1, and the second network may be a PLMN #2. For another example, the at least two networks may include a first network and a second network, where the first network may be an SNPN #1, and the second network may be an SNPN #2.

The first access and mobility management function network element is located in the first network.

It should be noted that, in embodiments of this application, an example in which the radio access network device is shared by two networks is used for description, and this is not limited.

The first message may be used for triggering the radio access network device to allocate a resource to a first broadcast service. The resource may be an air interface resource, and the air interface resource may be a scheduling time resource, a frequency resource, a scheduling priority, a buffer resource, or a data radio bearer (data radio bearer, DRB); or the resource may be stored context information (for example, QoS description information or QoS flow (flow) identification information) or the like. It may also be understood that the first message may request the radio access network device to allocate the resource to the first broadcast service, or the first message may request the radio access network device to establish a context corresponding to the first broadcast service.

Specifically, the first message may be an existing message, for example, an N2 request (N2 request) message; or may be a multicast/broadcast session-related message, for example, an MBS session resource setup request (MBS session resource setup request), an MBS session start request (MBS session start request), or a broadcast session resource setup request (broadcast session resource setup request).

It should be noted that the first message may be sent by the first access and mobility management function network element based on a message received from a first multicast/broadcast session management function network element.

The first message may carry an identifier of the first broadcast service, and the identifier may indicate the first broadcast service. An application function network element initiates the first broadcast service and requests to set up a resource and transmit the service in a PLMN. For example, the first broadcast service may be a weather forecast service, an emergency alert service, or a high-definition map service.

Optionally, the identifier of the first broadcast service includes a first identifier and/or a second identifier.

The first identifier may include at least one of the following: a globally unique identifier of the first broadcast service, an identifier of the first broadcast service in each of the at least two networks, or a temporary mobile group identity (temporary mobile group identity, TMGI) corresponding to the first broadcast service, where the temporary mobile group identity is shared by the at least two networks.

The globally unique identifier of the first broadcast service may globally and uniquely identify the first broadcast service. For example, the globally unique identifier may be an internet protocol IP multicast address of the first broadcast service. For another example, in addition to the internet protocol IP multicast address of the first broadcast service, the globally unique identifier may further include other content, for example, a source address (source address) of multicast/broadcast data. This is not limited.

For example, the IP multicast address may be one or more IP addresses in address segments 224.3.0.0 to 224.4.255.255, or 225.0.0.0 to 231.255.255.255, or 232.0.0.0 to 232.255.255.255, or 233.0.0.0 to 233.251.255.255 for internet protocol version 4 (internet protocol version 4, IPv4); or the IP multicast address may be one or more IP addresses with a prefix of ff02, ff05, or ff0x for internet protocol version 6 (internet protocol version 6, IPv6). This is not limited.

The identifier of the first broadcast service in each of the at least two networks may also be understood as an identifier of a broadcast session of the first broadcast service in each of the at least two networks.

Optionally, the identifier includes identification information of the network. For example, the identification information of the network is a PLMN ID (for example, 33E451), or a PLMN ID+a network identifier (network identifier, NID).

For example, the identifier of the first broadcast service in each of the at least two networks may be represented in a form of a list (list), and the list includes the identifier of the broadcast session of the first broadcast service in each of the at least two networks. The following uses Table 1 as an example for description. For example, an identifier of a broadcast session of the first broadcast service in a network #1 may be a TMGI #1, and the TMGI #1 may be specifically 70A886 32F461; an identifier of a broadcast session of the first broadcast service in a network #2 may be a TMGI #2, and the TMGI #2 may be specifically 81B749 33E451; and an identifier of a broadcast session of the first broadcast service in a network #3 may be a TMGI #3, and the TMGI #3 may be specifically 649739 42F352.

**Table 1 Identifier of a broadcast session of the first broadcast service in each network**

| Network identifier (network identification information PLMN ID) | Identifier (value) of a broadcast session of the first broadcast service in each network |
|---|---|
| Network #1 (32F461) | TMGI #1 (70A886 32F461) |
| Network #2 (33E451) | TMGI #2 (81B749 33E451) |
| Network #3 (42F352) | TMGI #3 (649739 42F352) |

It should be noted that, in an actual implementation, the identifier of the first broadcast service in each of the at least two networks may be represented by using the foregoing list, may be represented by using an array (for example, {70A886 32F461, 81B749 33E451, 649739 42F352}), or may be represented by using another manner (for example, a structure or a linked list) that identifies a group of data. This is not limited in this application.

The identifier of the broadcast session identifies the broadcast session, for example, may be an identifier of a group corresponding to the broadcast session, for example, a temporary mobile group identity.

The temporary mobile group identity (temporary mobile group identity, TMGI) corresponding to the first broadcast service may be shared by the at least two networks. It may be understood that a common TMGI is configured for the first broadcast service, and the common TMGI may uniquely identify the broadcast service in both the first network and the second network. Specifically, when MB-SMFs in the first network and the second network request a TMGI from the AF, the AF may provide the common TMGI.

The "common TMGI" means that one or more TMGIs may be shared by several (that is, at least two) networks. For example, for the first broadcast service, the TMGI in the first network and the TMGI in the second network are the same, and both are TMGI #v.

The second identifier may include an identifier of the first broadcast service in the first network. The identifier of the first broadcast service in the first network may be an identifier of a broadcast session of the first broadcast service in the first network. Optionally, the second identifier further includes identification information of the first broadcast service in the first network, for example, a PLMN ID or a PLMN ID+NID.

It should be noted that when the identifier of the first broadcast service includes the second identifier, the radio access network device may pre-configure, obtain, or receive the identifier of the first broadcast service in each of the at least two networks. For example, when establishing a session of the first broadcast service for the first time, the radio access network device receives a list (referring to Table 1) of the identifier of the first broadcast service in each of the at least two networks, and stores the list. Further, when a session of the first broadcast service is established not for the first time (for example, for the second time), a core network element (for example, the first access and mobility management function network element) in the first network may include the identifier of the first broadcast service in the first network, so that repeated sending of the entire list can be avoided, and transmission resources are saved.

The session of the multicast service may be a session used for transmitting the first broadcast service.

It should be noted that, in this application, when the identifier of the first broadcast service is the globally unique identifier of the first broadcast service, for example, a new information element may be added to a request message sent by the application function network element to the PLMN network. In other words, the globally unique identifier of the first broadcast service is added to the request message sent by the application function network element to the PLMN network for implementation. This manner makes a small change to an application server, is easily implemented by the application server, and is easily promoted. When the identifier of the first broadcast service is the identifier of the first broadcast service in each of the at least two networks, an information element in the existing message sent by the access and mobility management network element to the access network device may be extended. In other words, an original identifier of the first broadcast service in a network is extended to the identifier of the first broadcast service in each of the at least two networks, to implement a new function. This requires a small change to the network, and is easy to upgrade.

Step 102: The radio access network device obtains, based on the identifier of the first broadcast service, information about a first resource corresponding to the first broadcast service.

The first resource may be used for sending data of the first broadcast service to a terminal device in the second network. For example, the first resource may be an air interface resource. For example, the air interface resource is a scheduling time resource, a frequency resource, a scheduling priority, a buffer resource, or a data radio bearer (data radio bearer, DRB). Alternatively, the first resource may be stored context information, for example, QoS description information or QoS flow (flow) identification information. This is not limited.

The information about the first resource may be identification information (for example, a context identifier (context ID)) of the first resource or information such as time domain and frequency domain positions of the first resource. This is not limited.

Implementation of step 102 may be classified into the following scenarios:

Scenario 1: Scenario in which the radio access network device has established a session of the first broadcast service in a network (for example, the second network) (which may also be understood as a scenario in which a resource has been allocated to the first broadcast service in the second network)

In the scenario 1, a session context corresponding to the session of the first broadcast service (which may be referred to as a session context corresponding to the first broadcast service for short subsequently) may include the identifier of the first broadcast service and the information about the first resource allocated to the first broadcast service. In step 102, that the radio access network device obtains, based on the identifier of the first broadcast service, information about a first resource corresponding to the first broadcast service may be implemented in the following manner:

Manner 1: When the identifier of the first broadcast service is the globally unique identifier of the first broadcast service, the radio access network device searches, based on the globally unique identifier of the first broadcast service, for a broadcast session context corresponding to the first broadcast service, and the radio access network device obtains, based on the broadcast session context, the information about the first resource corresponding to the first broadcast service.

The broadcast session context may include the globally unique identifier of the first broadcast service and the information about the first resource.

Because the session context that is of the first broadcast service and that is established in the second network includes the globally unique identifier of the first broadcast service and the information about the first resource, when receiving a request from the first network for establishing the session context of the first broadcast service (or for allocating a resource to the session of the first broadcast service), a base station shared by the first network and the second network may reuse the first resource, to avoid a waste of resources.

Manner 2: When the identifier of the first broadcast service is the identifier of the first broadcast service in each of the at least two networks, the radio access network device searches, based on the identifier of the first broadcast service in each of the at least two networks, for a broadcast session context corresponding to the first broadcast service, and the radio access network device obtains, based on the broadcast session context, the information about the first resource corresponding to the first broadcast service.

The broadcast session context may include the identifier of the first broadcast service in each of the at least two networks and the information about the first resource.

The broadcast session context that corresponds to the first broadcast service and that is established in the second network includes the identifier of the first broadcast service in each of the at least two networks and the information about the first resource. Therefore, when receiving a request from another network for establishing the session context of the first broadcast service (or for allocating a resource to the session of the first broadcast service), a base station shared by the second network and the another network may reuse the first resource. In other words, the radio access network device does not need to re-allocate a resource to the first broadcast service in the another network, so that a waste of resources can be avoided.

Manner 3: When the identifier of the first broadcast service is the second identifier (for example, the identifier of the first broadcast service in the first network), the radio access network device obtains an identifier of the first broadcast service in the second network based on the second identifier and a pre-configured correspondence between the identifier of the first broadcast service in the first network and the identifier of the first broadcast service in the second network; the radio access network device searches, based on the identifier of the first broadcast service in the second network, for a broadcast session context corresponding to the first broadcast service; and the radio access network device obtains, based on the broadcast session context, the information about the first resource corresponding to the first broadcast service.

The broadcast session context may include the second identifier and the information about the first resource.

In addition, the broadcast session context that corresponds to the first broadcast service and that is established in the second network includes the second identifier and the information about the first resource. Therefore, when receiving a request from another network for establishing the session context of the first broadcast service (or for allocating a resource to the session of the first broadcast service), a base station shared by the second network and the another network may reuse the first resource. In other words, the radio access network device does not need to re-allocate a resource to the first broadcast service in the another network, so that a waste of resources can be avoided.

It should be noted that, in the foregoing scenario 1, the resource (for example, the first resource) has been allocated to the first broadcast service in the second network, and the resource may be used by a plurality of networks (for example, the first network) for transmitting the first broadcast service. In other words, the radio access network device does not need to re-allocate a resource to the first broadcast service in the first network, so that a waste of resources can be avoided.

In the foregoing implementations, because the broadcast session context corresponding to the first broadcast service has been established in the second network, and the broadcast session context includes the identifier of the first broadcast service and the information about the first resource, the radio access network device may obtain, by using the identifier of the first broadcast service, the information about the first resource that has been allocated to the first broadcast service in the second network, and the radio access network device may send the data of the first broadcast service to a terminal device in the first network by using the first resource.

Scenario 2: Scenario in which the radio access network device has not established a session of the first broadcast service in each network

In the scenario 2, the method 100 may further include: The radio access network device receives a second message from a second access and mobility management function network element, where the second message carries the identifier of the first broadcast service.

The second message is used for triggering allocation of a resource to the first broadcast service, and the second access and mobility management function network element is located in the second network. The identifier of the first broadcast service may include the first identifier.

Further, when the identifier of the first broadcast service includes the first identifier (for example, the identifier of the first broadcast service is the first identifier; and for another example, the identifier of the first broadcast service includes the first identifier and the second identifier), the radio access network device allocates the first resource to the first broadcast service based on the second message, and the radio access network device establishes a broadcast session context corresponding to the first broadcast service, where the broadcast session context includes the identifier of the first broadcast service and the information about the first resource.

For the second message in this scenario, refer to the descriptions of the first message. A difference lies in that the second message is transmitted between core network elements in the second network, and the first message is transmitted between core network elements in the first network.

The second message may be an existing message, for example, an N2 request message; or may be a multicast/broadcast session-related message, for example, an MBS session resource setup request, an MBS session start request, or a broadcast session resource setup request.

In the foregoing scenario 2, if a resource has not been allocated to the first broadcast service and a broadcast session corresponding to the first broadcast service has not been established in each network, the radio access network device may allocate the resource to the first broadcast service and establish the session context of the first broadcast service in the second network. The broadcast session context that corresponds to the first broadcast service and that is established in the second network includes the identifier of the first broadcast service and the information about the first resource. Therefore, the radio access network device may not need to repeatedly allocate resources to a same broadcast service in different networks. It may also be understood that the radio access network device may not distinguish between networks subsequently, but depending on whether a resource has been allocated to the broadcast service locally, so as to flexibly use (or may be understood as "share") the resource.

Step 103: The radio access network device sends the data of the first broadcast service to the terminal device in the first network by using the first resource.

In an optional implementation, after receiving service data from a multicast/broadcast user management network element, the radio access network device identifies, based on identification information (for example, a target IP address, a tunnel end point identifier of a general packet radio system tunneling protocol (general packet radio service (GPRS) tunneling protocol, GTP) header, and a QoS flow identifier) included in the service data, that the service data belongs to the first broadcast service, and the radio access network device sends (or broadcasts), based on locally stored context information (for example, a scheduling queue or a reserved resource), the service data by using an air interface resource (for example, a time-frequency resource) corresponding to the first broadcast service. Correspondingly, the terminal device in the first network listens to the air interface resource, and receives the service data.

In another optional implementation, when the identifier of the first broadcast service is the temporary mobile group identity, because the temporary mobile group identity is shared by all the networks, when receiving the temporary mobile group identity, the radio access network device may send the data of the first broadcast service to the terminal device in the first network by using the first resource. In other words, in this implementation, because the radio access network device receives the same temporary mobile group identity in all the networks, the radio access network device does not need to search the first broadcast session context to obtain the information about the first resource, and may directly send the data of the first broadcast service to the terminal device in the first network by using the first resource.

Based on the foregoing technical solution, the broadcast session context corresponding to the first broadcast service has been established in the second network, and the broadcast session context includes the identifier of the first broadcast service and the information about the first resource. Therefore, the radio access network device may obtain, based on the identifier of the first broadcast service, the information about the first resource that has been allocated to the first broadcast service in the second network. The radio access network device may send the data of the first broadcast service to the terminal device in the first network by using the first resource. In other words, the radio access network device may reuse the first resource, and does not need to re-allocate a resource to the first broadcast service in another network, so that a waste of resources can be avoided.

As shown in FIG. 5, this application further provides a broadcast communication method 200. For example, the method may be performed by a multicast/broadcast session management function network element. The method 200 includes the following steps.

Step 201: The multicast/broadcast session management function network element receives an identifier of a first broadcast service.

The multicast/broadcast session management function network element may be a multicast/broadcast session management function network element located in a first network, or may be a multicast/broadcast session management function network element located in a second network. This is not limited.

Optionally, the identifier of the first broadcast service includes a first identifier. Specifically, for descriptions of the first identifier, refer to the descriptions of step 101 in the method 100. Details are not described herein again.

In an optional implementation, that the multicast/broadcast session management function network element receives an identifier of a first broadcast service includes: The multicast/broadcast session management function network element receives the identifier of the first broadcast service from an application function network element.

Further, before that the multicast/broadcast session management function network element receives the identifier of the first broadcast service from an application function network element, the method 200 may further include:

The multicast/broadcast session management function network element receives a third message from the application function network element, where the third message carries the identifier of the first broadcast service, and the third message is used for triggering the multicast/broadcast session management function network element to send a temporary mobile group identity of the first broadcast service to the application function network element. The multicast/broadcast session management function network element obtains the temporary mobile group identity of the first broadcast service from a first network element based on the third message; or the multicast/broadcast session management function network element allocates the temporary mobile group identity to the first broadcast service based on the third message.

Specifically, the third message may be a TMGI allocation request (TMGI allocation request) message.

Specifically, the first network element may be a unified data management network element, a unified data storage network element, a network repository function network element, a network discovery function network element, a policy control function network element, or a multicast/broadcast database. The multicast/broadcast database may be shared by at least two networks.

In another implementation, that the multicast/broadcast session management function network element receives an identifier of a first broadcast service includes: The multicast/broadcast session management function network element receives the identifier of the first broadcast service from a multicast/broadcast user plane function network element, where the identifier of the first broadcast service is a globally unique identifier of the first broadcast service.

Further, before that the multicast/broadcast session management function network element receives the identifier of the first broadcast service from a multicast/broadcast user plane function network element, the method 200 may further include:

The multicast/broadcast session management function network element sends a fourth message to the multicast/broadcast user plane function network element, where the fourth message requests establishment or modification of a session of the first broadcast service, the fourth message carries first indication information, and the first indication information is used for triggering the multicast/broadcast user plane function network element to detect the identifier of the first broadcast service.

The multicast/broadcast user plane function network element is indicated to detect the identifier of the first broadcast service, so that the globally unique identifier of the first broadcast service can be successfully obtained, that is, the identifier of the first broadcast service can be obtained without depending on the application function network element.

The multicast/broadcast user plane function network element may be a multicast/broadcast user plane function network element located in the first network, or may be a multicast/broadcast user plane function network element located in the second network. This is not limited.

Specifically, the fourth message may be an N4 session establishment or modification request (N4mb session establishment/modification request) message.

Step 202: The multicast/broadcast session management function network element sends the identifier of the first broadcast service to an access and mobility management function network element.

The access and mobility management function network element may be an access and mobility management function network element located in the first network, or may be an access and mobility management function network element located in the second network. This is not limited.

Based on the foregoing technical solution, the multicast/broadcast session management function network element may receive the identifier of the first broadcast service, and send the identifier to the access and mobility management function network element, so that a radio access network device can obtain the identifier of the first broadcast service, and identify same broadcast data in different networks.

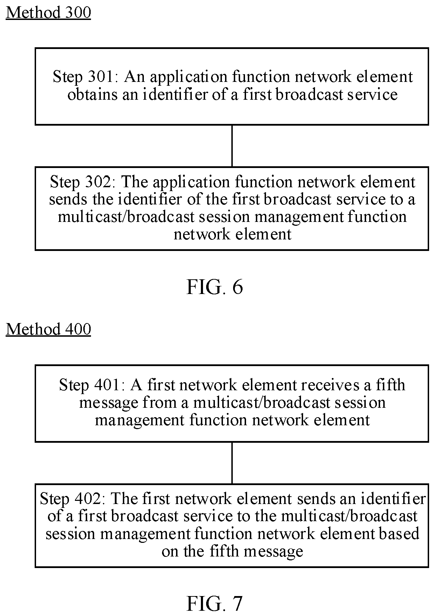

As shown in FIG. 6, this application further provides a broadcast communication method 300. For example, the method may be performed by an application function network element. The method 300 includes the following steps.

Step 301: The application function network element obtains an identifier of a first broadcast service.

Optionally, the identifier of the first broadcast service includes a first identifier. Specifically, for descriptions of the first identifier, refer to the descriptions of step 101 in the method 100. Details are not described herein again.

In an optional implementation, that the application function network element obtains an identifier of a first broadcast service includes: The application function network element generates a globally unique identifier of the first broadcast service.

In another optional implementation, that the application function network element obtains an identifier of a first broadcast service includes: The application function network element receives an identifier of the first broadcast service in a first network from a first multicast/broadcast session management function network element in the first network; and the application function network element receives an identifier of the first broadcast service in a second network from a second multicast/broadcast session management function network element in the second network.

It may also be understood that the application function network element may obtain the identifier of the first broadcast service in each network by interacting with a network element of a core network in each network.

In still another optional implementation, that the application function network element obtains an identifier of a first broadcast service includes: The application function network element obtains a temporary mobile group identity of the first broadcast service from a multicast/broadcast session management function network element.

Step 302: The application function network element sends the identifier of the first broadcast service to a multicast/broadcast session management function network element.

According to the method provided in this embodiment, the application function network element may flexibly obtain the identifier of the first broadcast service in the foregoing implementations.

Based on the foregoing technical solution, the application function network element may send the obtained identifier of the first broadcast service to the multicast/broadcast session management function network element, so that a radio access network device can obtain the identifier of the first broadcast service, and identify same broadcast data in different networks.

As shown in FIG. 7, this application further provides a broadcast communication method 400. The method may be performed by a first network element. The method 400 includes the following steps.

Step 401: The first network element receives a fifth message from a multicast/broadcast session management function network element.

The fifth message may carry an identifier of a first broadcast service, and the fifth message may be used for triggering the first network element to send a temporary mobile group identity of the first broadcast service.

For descriptions of the first network element, refer to the descriptions in step 201 in the method 200. Details are not described herein again.

Specifically, the fifth message may be a message requesting broadcast session creation (creation of broadcast sessions), or the fifth message may be a multicast/broadcast session create request message (for example, an Nmbsmf_ MBS session create request) requesting the temporary mobile group identity of the first broadcast service.

Step 402: The first network element sends the temporary mobile group identity of the first broadcast service to the multicast/broadcast session management function network element based on the fifth message.

Optionally, the method 400 further includes: The first network element receives a correspondence between the identifier of the first broadcast service and the temporary mobile group identity from the multicast/broadcast session management function network element. It may also be understood that the temporary mobile group identity that is of the first broadcast service and that is prestored in the first network element does not completely include a temporary mobile group identity of the first broadcast service in each network. In this case, the multicast/broadcast session management function network element may allocate the temporary mobile group identity to the first broadcast service in the network, and send the temporary mobile group identity to the first network element for storage.

Optionally, the temporary mobile group identity is shared by at least two networks. For example, the first broadcast service has the same temporary mobile group identity in all the networks. For another example, the first broadcast service has different temporary mobile group identities in all the networks. However, in each network, a core network element and a radio access network device in each network may identify that the first broadcast service is indicated by using the temporary mobile group identity.

Based on the foregoing technical solution, the temporary mobile group identity of the first broadcast service is designed, so that the first broadcast service can be identified in different networks by a core network element or a radio access network device in each network as the first broadcast service, and the radio access network device does not need to re-allocate a resource to the first broadcast service in different networks, so that a waste of air interface resources can be avoided.

In this application, in the following specific embodiments, an example in which a first network is a PLMN #a, a second network is a PLMN #b, and a terminal device is UE is used for description. In the following embodiments, a suffix "#b" of a network element of a core network indicates that the network element of the core network is in the PLMN #b, and a suffix "#a" of a network element of a core network indicates that the network element of the core network is in the PLMN #a. ARAN in the following specific embodiments may be understood as a RAN shared by the PLMN #a and the PLMN #b.

It should be noted that in the following embodiments of this application, only two PLMN networks are used as an example for description, and a quantity of networks is not limited in this application. In other words, the technical solutions of this application may be applicable to a scenario in which n (n≥1) networks share a RAN.

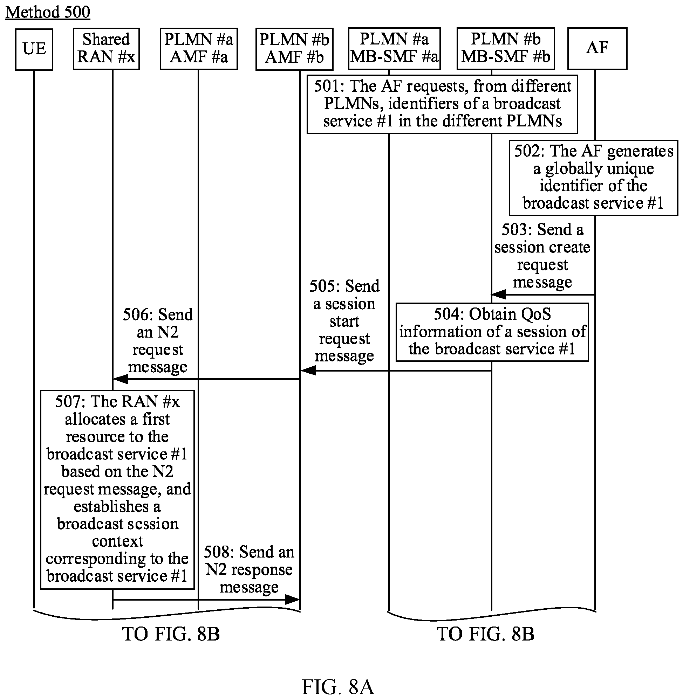

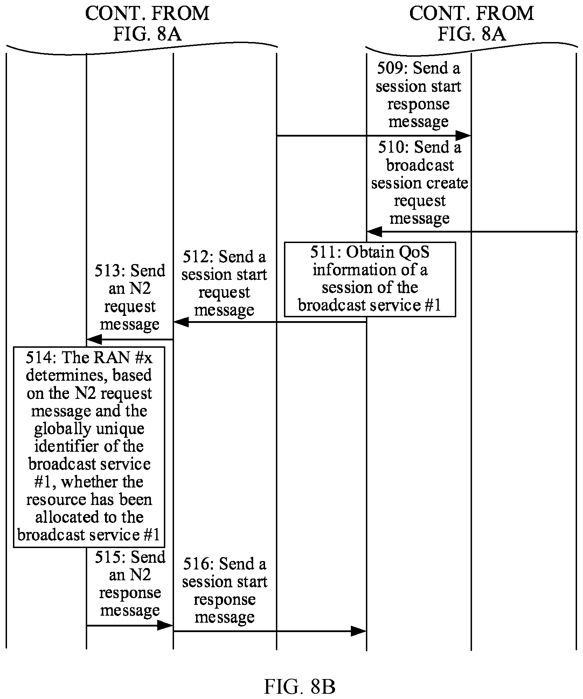

FIG. 8A and FIG. 8B are a schematic flowchart of a broadcast communication method 500 according to this application. It is assumed that there are two PLMNs (denoted as a PLMN #a and a PLMN #b) in this embodiment. In this embodiment, a broadcast service #1 is used as an example for description. The method includes the following steps.

Step 501: An AF requests, from different PLMN networks, identifiers of the broadcast service #1 in the different PLMN networks.

In this application, the identifiers of the broadcast service #1 in the different PLMNs may be MBS session IDs, for example, temporary mobile group identities (temporary mobile group identities, TMGIs). Details are not described below again.

For example, the AF requests an identifier of the broadcast service #1 from an MB-SMF #a in the PLMN #a. It is assumed that the AF obtains that the identifier of the broadcast service #1 in the PLMN #a is a TMGI #x. Similarly, the AF requests an identifier of the broadcast service #1 from an MB-SMF #b in the PLMN #b. It is assumed that the AF obtains that the identifier of the broadcast service #1 in the PLMN #b is a TMGI #y.

Step 502: The AF generates a globally unique identifier of the broadcast service #1.

In an optional implementation, the AF generates the globally unique identifier of the broadcast service #1 based on the identifier of the broadcast service #1 in the PLMN #a and the identifier of the broadcast service #1 in the PLMN #b.

In this embodiment, the globally unique identifier of the broadcast service #1, for example, may identify data of the broadcast service #1. For another example, the globally unique identifier may be a number. For another example, the globally unique identifier may be address information identifying the broadcast service #1.

In an example, the globally unique identifier, for example, an indication #z, of the broadcast service #1 may identify the data of the broadcast service #1. In an example, a globally unique identifier, for example, an indication #w, of a broadcast service #2 may identify data of the broadcast service #2.

In another example, the globally unique identifier of the broadcast service #1 may alternatively be an IP multicast address of the broadcast service #1. It should be noted that, in this embodiment, if the globally unique identifier of the broadcast service #1 is the IP multicast address of the broadcast service #1, optionally, step 501 does not need to be performed. It may also be understood that, in this case, the AF does not need to first request, from each PLMN, the TMGI of the broadcast service #1 in the PLMN. For example, when the AF subsequently sends a session create request message to the MB-SMF #b, if the session create request message carries only the IP multicast address of the broadcast service #1, and does not carry the TMGI of the broadcast service #1 in the PLMN #b, the MB-SMF #b provides the AF with the TMGI of the broadcast service #1 in the PLMN #b.

For example, in this embodiment, in different PLMNs, TMGIs (for example, the TMGI #x and the TMGI #y) of the broadcast service #1 have the same indication #z (an example of the globally unique identifier of the broadcast service #1), and subsequently, a base station may identify that in the different PLMNs, the different broadcast service identifiers actually correspond to the same broadcast service (namely, the broadcast service #1). In other words, although TMGIs are different in different PLMNs (for example, the broadcast service #1 in different PLMNs has different TMGIs), the globally unique identifier, for example, the indication #z, of the broadcast service #1 is carried. In this case, a RAN may determine that an AMF requests to transmit the same broadcast service, that is, the AMF requests to transmit same broadcast data.

For another example, in this embodiment, in different PLMNs, TMGIs (for example, the TMGI #x and the TMGI #y) of the broadcast service #1 have a same IP multicast address (another example of the globally unique identifier of the broadcast service #1), and subsequently, a base station may identify that in the different PLMNs, the different TMGIs actually correspond to the same broadcast service (namely, the broadcast service #1). In other words, although identifiers of the broadcast service #1 are different in different PLMNs (for example, the broadcast service #1 in different PLMNs has different TMGIs), an AMF requests to transmit the broadcast service #1, or it may be understood that the AMF requests to transmit broadcast data of the broadcast service #1.

Step 503: The AF sends the session create request (session create request) message to the MB-SMF #b in the PLMN #b.

Correspondingly, the MB-SMF #b in the PLMN #b receives the broadcast session create request.

The session create request message carries the globally unique identifier of the broadcast service #1. For example, the session create request message carries the indication #z of the broadcast service #1. For another example, the broadcast session create request message carries the IP multicast address of the broadcast service #1.

In an optional implementation, the AF may send the session create request to the MB-SMF #b. For example, the AF sends the broadcast session create request to the MB-SMF #b by invoking an Nmbsmf_MBSSession_Create Request service. It may also be understood that, in this case, the AF is in a trusted domain (trusted domain).

In another optional implementation, the AF may first send the session create request to an NEF, and then the NEF forwards the session create request to the MB-SMF #b. For example, the AF first sends the session create request to the NEF by invoking an Nnef_MBSSession_Create request service, and then the NEF forwards the session create request to the MB-SMF #b by invoking an Nmbsmf_MBSSession_Create Request service. It may also be understood that, in this case, the AF is in an untrusted domain (untrusted domain), and the NEF may adjust some information in the broadcast session create request. For example, because the AF is in the untrusted domain and does not know a specific cell planning, the AF may provide geographic area information, and the NEF "translates" the geographic area information into cell or tracking area information, and sends the cell or tracking area information to the MB-SMF #b.

In this embodiment, the session create request message sent by the AF to the MB-SMF #b may further carry one or more of the following information: for example, the identifier TMGI #y of the broadcast service #1 in the PLMN #b, requirement information of the broadcast service #1, and broadcast area information.

The requirement information of the broadcast service #1 may include, for example, a delay requirement of the broadcast service #1, a priority requirement of the broadcast service #1, and a bandwidth requirement of the broadcast service #1. Alternatively, the requirement information of the broadcast service #1 may alternatively be broadcast policy information, for example, a 5G quality of service (quality of service, QoS) identifier (identifier) (namely, a 5QI), allocation and retention priority (allocation and retention priority, ARP) information, or the like.

Step 504: The MB-SMF #b in the PLMN #b obtains QoS information of a session of the broadcast service #1.

In an optional implementation, the MB-SMF #b may send the obtained requirement information of the broadcast service #1 to a PCF #b network element, obtain policy information of the session of the broadcast service #1 from the PCF #b network element, and generate the QoS information of the broadcast session based on the policy information.

In another optional implementation, the AF may send the requirement information of the broadcast service #1 to a PCF #b, the PCF #b generates policy information of the broadcast session based on the service requirement information, the PCF #b may push the policy information of the session of the broadcast service #1 to the MB-SMF #b, and the MB-SMF #b generates the QoS information of the broadcast session based on the policy information.

In still another optional implementation, the MB-SMF #b may generate the QoS information of the broadcast session based on the obtained requirement information of the broadcast service #1 and a locally configured policy.

Step 505: The MB-SMB #b selects an AMF #b, and sends a session start request (session start request) message to the AMF #b.

Correspondingly, the AMF #b receives the session start request message.

In an optional implementation, the MB-SMF #b may select, with reference to the broadcast area information and coverage areas of AMFs, the AMF to which the MB-SMF #b sends the message.

In another optional implementation, the MB-SMF #b may alternatively select the AMF in another manner. For example, the MB-SMF #b sends the session start request message to all AMFs. In this case, the AMF #b may accept, based on the coverage area of the AMF #b and the broadcast area information, the request sent by the MB-SMF #b.

In this embodiment, the session start request message carries the globally unique identifier of the broadcast service #1, for example, the indication #z; and for another example, the IP multicast address of the broadcast service #1.

In addition, the session start request message may further carry one or more of the following information: for example, the identifier TMGI #y of the broadcast service #1 in the PLMN #b, the broadcast area information (for example, cell list (cell list) information or a tracking area list ((tracking area, TA) list)), and the QoS information of the broadcast session.

Step 506: The AMF #b selects a RAN #x (for example, a base station), and sends an N2 request (N2 request) message (an example of a second message) to the RAN #x.

Correspondingly, the RAN #x receives the N2 request message.

In an optional implementation, the AMF #b may select the RAN #x with reference to the broadcast area information and coverage areas of RANs.

In another optional implementation, the AMF #b may alternatively select the RAN #x in another manner. For example, the AMF #b sends the message to all RANs. In this case, the RAN #x may determine, based on the coverage area of the RAN #x and the broadcast area information, to accept the request sent by the AMF #b.

In this embodiment, the N2 request message carries the globally unique identifier of the broadcast service #1, for example, the indication #z; and for another example, the IP multicast address of the broadcast service #1.

The N2 request message may further carry one or more of the following information: for example, the identifier TMGI #y of the broadcast service #1 in the PLMN #b, the broadcast area information (for example, the cell list (cell list) information or the tracking area list ((tracking area, TA) list)), and the QoS information of the broadcast session.

In this embodiment, the N2 request message is used for triggering the RAN #x to allocate a resource to the broadcast service #1. In other words, the N2 request message requests the RAN #x to allocate the resource to the broadcast service #1. It may also be understood that the N2 request message requests the RAN #x to establish a session context corresponding to the broadcast service #1.

In this application, the information in the N2 request message sent by the AMF #b to the RAN #x may not be completely the same as the information in the session start message sent by the MB-SMF #b to the AMF #b. For example, the N2 request message sent by the AMF #b to the RAN #x may further include other information generated by the AMF #b, for example, tunnel identification information or next generation application protocol (next generation application protocol, NGAP) identification information (for example, an AMF NGAP ID or a RAN NGAP ID). Details are not described below again.

Step 507: The RAN #x allocates a first resource to the broadcast service #1 based on the N2 request message, and establishes the broadcast session context corresponding to the broadcast service #1.

The broadcast session context may include the globally unique identifier of the broadcast service #1 and information about the first resource.

In this application, the "broadcast session context" may also be understood as "broadcast session context information". Details are not described below again.

In this embodiment, the first resource may also be understood as being used for sending the data of the broadcast service #1 to UE in the PLMN #b.

In an example, the RAN #x may allocate the corresponding first resource based on the QoS information of the broadcast session. For example, a resource is reserved for a QoS flow (flow) with a guaranteed bit rate (guaranteed bit rate, GBR). Specifically, the information that is about the first resource of the broadcast service #1 and that is determined by the RAN #x may include: (1) information about a multicast received group-radio network temporary identifier (group-radio network temporary identifier, G-RNTI); (2) information about a bandwidth part (bandwidth part, BWP) corresponding to the broadcast service #1, where for example, the service is received in the BWP, and a sub-carrier spacing (sub-carrier spacing, SCS), a frequency domain position, and a cyclic prefix (cyclic prefix, CP) length that correspond to the BWP are determined based on a configuration of the BWP, configuration information of the BWP further includes configuration information of a control resource set (control resource set, CORESET) detected via a physical downlink control channel (physical downlink control channel, PDCCH), and the configuration information of the CORESET indicates a time-frequency resource on which a PDCCH with the G-RNTI is located; (3) a scrambling sequence of a physical downlink data channel (physical downlink data channel, PDSCH) of the broadcast service #1, where it may also be understood that UE uses the sequence to perform descrambling when decoding the PDSCH of the service; (4) a discontinuous reception (discontinuous reception, DRX) parameter of the G-RNTI, where it may also be understood as that the UE uses the DRX parameter to perform G-RNTI detection; (5) a configuration of a demodulation reference signal, where it may also be understood as that the UE uses the reference signal to perform PDSCH demodulation scheduled by using the G-RNTI; and (6) information about a rate matching reference signal.

The broadcast session context that corresponds to the broadcast service #1 and that is established by the RAN #x may further include: the identifier TMGI #y of the broadcast service #1 in the PLMN #b, the broadcast area information (for example, the cell list (cell list) information or the tracking area list ((tracking area, TA) list)), and a QoS context of the broadcast session (for example, including one or more contexts corresponding to one or more MBS QoS flows, for example, a QoS flow identifier, QoS flow level QoS parameters, and identification information of an MBS session).

Optionally, in this application, the broadcast session context may further include information about a radio bearer (radio bearer) of the MBS session. Details are not described below again.

In this application, the RAN #x may determine, depending on whether the RAN #x is in an area corresponding to the broadcast area information, whether the broadcast session context needs to be stored. For example, if the RAN #x determines that the RAN #x is located in the area corresponding to the broadcast area information, the RAN #x stores the broadcast session context. For another example, if the RAN #x determines that the RAN #x is not located in the area corresponding to the broadcast area information, the RAN #x does not store the broadcast session context. Details are not described below again.

Step 507 may also be understood as follows: The RAN #x searches, based on the N2 request message and the globally unique identifier (for example, the indication #z) of the broadcast service #1, for the broadcast session context corresponding to the broadcast service #1. If the RAN #x does not find the broadcast session context including the indication #z, the RAN #x determines that no resource has been allocated to the broadcast service #1. Further, the RAN #x allocates a resource to the broadcast service #1 in the PLMN #b, and establishes the broadcast session context corresponding to the broadcast service #1.

Step 508: The RAN #x sends an N2 response message to the AMF #b.

For example, the RAN #x sends the N2 response message to the AMF #b in response to the N2 request message sent by the AMF #b.

Step 509: The AMF #b sends a session start response message to the MB-SMF #b.

For example, the AMF #b sends the session start response message to the MB-SMF #b in response to the session start request message sent by the MB-SMF #b.

In this application, subsequent steps of establishing a broadcast session in each network may further include, for example: The MB-SMF #b configures an MB-UPF #b (for example, configure multicast data identification and forwarding rules of the MB-UPF #b), and the MB-SMF #b sends a response message for the session create request to the AF. For specific content, refer to the protocol 3GPP TS 23.247. Details are not described herein again.

The foregoing steps 503 to 509 are a procedure of establishing the broadcast session corresponding to the broadcast service #1 in the PLMN #b and allocating the first resource to the data of the broadcast service #1. The following steps 510 to 516 are a procedure of establishing a broadcast session corresponding to the broadcast service #1 in the PLMN #a and sending the data of the broadcast service #1 to UE in the PLMN #a by using the first resource allocated to the broadcast service #1 in the PLMN #b.

Step 510: The AF sends a broadcast session create request (session create request) message to the MB-SMF #a in the PLMN #a.

Correspondingly, the MB-SMF #a in the PLMN #a receives the broadcast session create request.

The broadcast session create request message carries the globally unique identifier of the broadcast service #1. For example, the broadcast session create request message carries the indication #z of the broadcast service #1. For another example, the broadcast session create request message carries the IP multicast address of the broadcast service #1.

In an optional implementation, the AF may send the broadcast session create request to the MB-SMF #a. For example, the AF sends the broadcast session create request to the MB-SMF #a by invoking an Nmbsmf_MBSSession_Create Request service. It may also be understood that, in this case, the AF is in the trusted domain (trusted domain).

In another optional implementation, the AF may first send the session create request to the NEF, and then the NEF forwards the session create request to the MB-SMF #a. For example, the AF first sends the session create request to the NEF by invoking an Nnef_MBSSession_Create request service, and then the NEF forwards the session create request to the MB-SMF #a by invoking an Nmbsmf_MBSSession_Create Request service. It may also be understood that, in this case, the AF is in the untrusted domain (untrusted domain), and the NEF may adjust some information in the broadcast session create request. For example, because the AF is in the untrusted domain and does not know a specific cell planning, the AF may provide geographic area information, and the NEF "translates" the geographic area information into cell or tracking area information, and sends the cell or tracking area information to the MB-SMF #a.

Specifically, the session create request message sent by the AF to the MB-SMF #a carries the globally unique identifier of the broadcast service #1. The session create request message may further carry one or more of the following information: for example, the identifier TMGI #x of the broadcast service #1 in the PLMN #a, requirement information of the broadcast service #1, and broadcast area information.

The requirement information of the broadcast service #1 may include, for example, a delay requirement of the broadcast service #1, a priority requirement of the broadcast service #1, and a bandwidth requirement of the broadcast service #1. Alternatively, the requirement information of the broadcast service #1 may alternatively be broadcast policy information, for example, a 5G quality of service (quality of service, QoS) identifier (identifier) (namely, a 5QI), allocation and retention priority (allocation and retention priority, ARP) information, or the like.

Step 511: The MB-SMF #a in the PLMN #a obtains QoS information of a session of the broadcast service #1.

In an optional implementation, the MB-SMF #a may send the obtained requirement information of the broadcast service #1 to a PCF #a network element, obtain policy information of the session of the broadcast service #1 from the PCF network element, and generate the QoS information of the broadcast session based on the policy information.

In another optional implementation, the MB-SMF #a may directly obtain policy information of the session of the broadcast service #1 from a PCF #a, and generate the QoS information of the broadcast session based on the policy information.

In still another optional implementation, the MB-SMF #a may generate the QoS information of the broadcast session based on the obtained requirement information of the broadcast service #1 and a locally configured policy.

Step 512: The MB-SMB #a selects an AMF #a network element, and sends a session start request (session start request) message to the AMF #a. Correspondingly, the AMF #a receives the session start request message.

In an optional implementation, the MB-SMF #a may select, with reference to the broadcast area information and coverage areas of AMFs, the AMF to which the MB-SMF #a sends the message.

In another optional implementation, the MB-SMF #a may alternatively select the AMF in another manner. For example, the MB-SMF #a sends the session start request message to all AMFs. In this case, the AMF #a may accept, based on the coverage area of the AMF #a and the broadcast area information, the request sent by the MB-SMF #a.

In this embodiment, the session start request message carries the globally unique identifier of the broadcast service #1, for example, the indication #z; and for another example, the IP multicast address of the broadcast service #1.

The session start request message may further carry one or more of the following information: for example, the identifier TMGI #x of the broadcast service #1 in the PLMN #a, the broadcast area information (for example, cell list (cell list) information or a tracking area list ((tracking area, TA) list)), and the QoS information of the broadcast session.

Step 513: The AMF #a selects the RAN #x (for example, the base station), and sends an N2 request (N2 request) message (an example of a first message) to the RAN #x.

Correspondingly, the RAN #x receives the N2 request message.

In an optional implementation, the AMF #a may select the RAN #x with reference to the broadcast area information and coverage areas of RANs.

In another optional implementation, the AMF #a may alternatively select the RAN #x in another manner. For example, the AMF #a sends the message to all RANs. In this case, the RAN #x may accept, based on the coverage area of the RAN #x and the broadcast area information, the request sent by the AMF.

It may also be understood that, in this application, the same RAN, for example, the RAN #x, is selected from the PLMN #b and the PLMN #a. In other words, in this application, in different networks, the RAN may be shared (for example, RANs are the same). Details are not described below again.

In this embodiment, the N2 request message carries the globally unique identifier of the broadcast service #1, for example, the indication #z; and for another example, the IP multicast address of the broadcast service #1.

The N2 request message may further carry one or more of the following information: for example, the identifier TMGI #x of the broadcast service #1 in the PLMN #a, the broadcast area information (for example, the cell list (cell list) information or the tracking area list ((tracking area, TA) list)), and the QoS information of the broadcast session.

In this embodiment, the N2 request message is used for triggering the RAN #x to allocate a resource to the broadcast service #1. In other words, the N2 request message requests the RAN #x to allocate the resource to the broadcast service #1. It may also be understood that the N2 request message requests the RAN #x to establish a session context corresponding to the broadcast service #1.

In this embodiment, the information in the N2 request message sent by the AMF #a to the RAN #x may not be completely the same as the information in the session start message sent by the MB-SMF #a to the AMF #a. For example, the N2 request message sent by the AMF #a to the RAN #x may further include other information generated by the AMF #a, for example, tunnel identification information or next generation application protocol (next generation application NGAP) identification information (for example, an AMF NGAP ID or a RAN NGAP ID).

Step 514: The RAN #x determines, based on the N2 request message and the globally unique identifier of the broadcast service #1, whether the resource has been allocated to the broadcast service #1. If the RAN #x has allocated the resource to the broadcast service #1, the RAN #x sends the data of the broadcast service #1 in the PLMN #a by using the resource; and/or if the RAN #x has not allocated the resource to the broadcast service #1, the RAN #x allocates the resource to the broadcast service #1.

For the "resource", refer to the related descriptions in the foregoing embodiments. Details are not described again.

In an optional implementation, the RAN #x searches, based on the N2 request message and the globally unique identifier, for example, the indication #z, of the broadcast service #1, for the broadcast session context corresponding to the broadcast service #1. If the RAN #x determines that the broadcast session context in the PLMN #b already includes the indication #z, the RAN #x determines that the resource has been allocated to the broadcast service #1, and finds the information about the first resource in the broadcast session context in the PLMN #b. The RAN #x determines not to set up an air interface resource corresponding to the broadcast service #1 in the PLMN #a, and does not set up a context corresponding to the broadcast service #1 in the PLMN #a. In other words, the RAN #x determines that the data of the broadcast service #1 in the PLMN #a may be sent by using the first resource in the PLMN #b.

In another optional implementation, before the RAN #x searches for the globally unique identifier of the broadcast service #1, if the RAN #x has allocated a second resource to the broadcast service #1 in the PLMN #a and has established a context for the broadcast service #1 in the PLMN #a, and after the searching, the RAN #x determines that the resource has been previously allocated to the broadcast service #1 in the PLMN #b, and finds the information about the first resource in the broadcast session context in the PLMN #b, the RAN #x may delete ("delete" may also be understood as "release") the second resource allocated to the broadcast service #1 in the PLMN #a, and delete the context established for the broadcast service #1 in the PLMN #a. In other words, the RAN #x determines that the data of the broadcast service #1 in the PLMN #a may be sent by using the first resource in the PLMN #b. Alternatively, the RAN #x may not send the data of the broadcast service #1 in the PLMN #a by using the second resource, but still send the data of the broadcast service #1 in the PLMN #b by using the first resource allocated to the broadcast service #1 in the PLMN #b.

In this application, that the RAN #x "searches for the broadcast session context corresponding to the broadcast service #1" may be, for example, implemented in the following implementation. In an optional implementation, after receiving the globally unique identifier, the RAN #x searches locally stored broadcast session contexts for whether the globally unique identifier exists. If there is a broadcast session context whose corresponding globally unique identifier is the same as the globally unique identifier of the broadcast service #1, it may be considered that the searching succeeds. Otherwise, the RAN #x may consider that no context for the broadcast service #1 has been established in this base station. In other words, the RAN #x receives, for the first time an N2 message related to the broadcast service #1. Details are not described below again.

In this application, that "the RAN #x sends the data of the broadcast service #1 in the PLMN #a by using the resource" may be, for example, implemented in the following implementation. In an optional implementation, the RAN #x identifies, based on identification information (for example, a target IP address, tunnel end point identifier of a GTP header, and a QoS flow identifier) included in received service data, that the data belongs to the broadcast service #1. Then, the RAN #x may send the data of the broadcast service #1 by using an air interface resource (for example, a time-frequency resource) based on locally stored context information (for example, a scheduling queue or a reserved resource). Terminal devices that are located in different networks but that receive the broadcast service #1 listen to the corresponding air interface resource, and may further receive the data of the broadcast service #1. Details are not described below again.

Step 515: The RAN #x sends an N2 response message to the AMF #a.

For example, the RAN #x sends the N2 response message to the AMF #a in response to the N2 request message sent by the AMF #a.

Step 516: The AMF #a sends a session start response message to the MB-SMF #a.

For example, the AMF #a sends the session start response message to the MB-SMF #a in response to the session start request message sent by the MB-SMF #a.

Based on the foregoing technical solution, the globally unique identifier of the broadcast service is sent to the RAN, so that in a scenario in which different operators share a base station, the RAN can identify the same broadcast service. Therefore, the RAN sends the data of the broadcast service in the PLMN #a by using the resource allocated to the broadcast service in the PLMN #b. It may also be understood that the RAN may share the air interface resource for users of the different operators, so that transmission resources of the RAN can be saved, and a waste of air interface resources can be avoided.

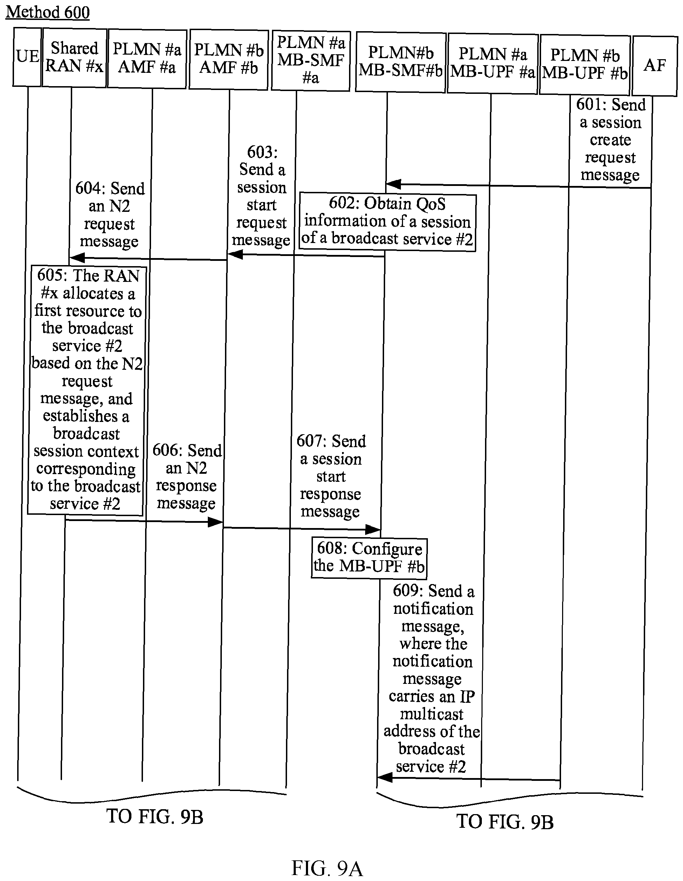

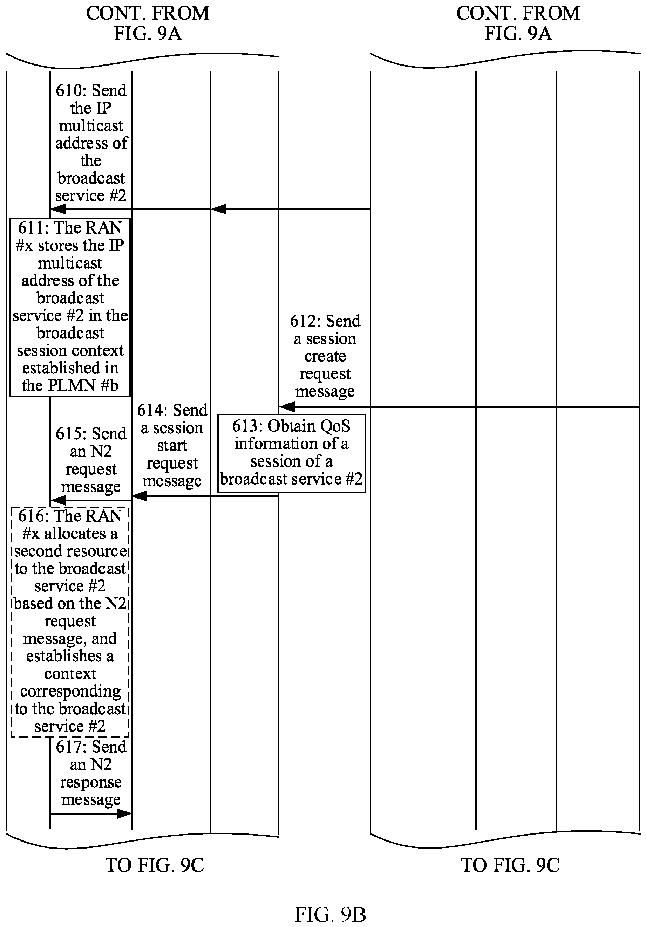

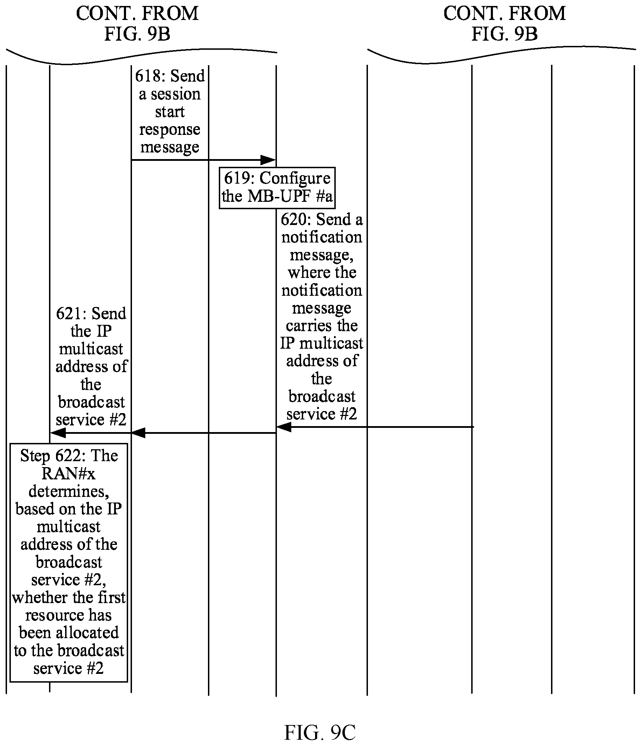

FIG. 9A, FIG. 9B, and FIG. 9C are a schematic flowchart of a broadcast communication method 600 according to this application. It is assumed that there are two PLMNs (denoted as a PLMN #a and a PLMN #b) in this embodiment. In this embodiment, a broadcast service #2 is used as an example for description. The method includes the following steps.

Step 601: An AF sends a session create request (session create request) message to an MB-SMF #b in the PLMN #b.

Correspondingly, the MB-SMF #b in the PLMN #b receives the session create request.

In this embodiment, after the AF sends the session create request to the MB-SMF #b, the MB-SMF #b may provide the AF with a TMGI, for example, a TMGI #p, of the broadcast service #2 in the PLMN #b.

Specifically, for a manner in which the AF sends the session create request to the MB-SMF #b, refer to step 503 in the method 500.

In this embodiment, the session create request message sent by the AF to the MB-SMF #b carries one or more of the following information: for example, an MBS session identifier, for example, the TMGI #p, of the broadcast service #2, requirement information of the broadcast service #2, and broadcast area information.

The requirement information of the broadcast service #2 may include, for example, a delay requirement of the broadcast service #2, a priority requirement of the broadcast service #2, and a bandwidth requirement of the broadcast service #2. Alternatively, the requirement information of the broadcast service #2 may alternatively be broadcast policy information, for example, a 5G quality of service (quality of service, QoS) identifier (identifier) (namely, a 5QI), allocation and retention priority (allocation and retention priority, ARP) information, or the like.

Step 602: The MB-SMF #b in the PLMN #b obtains QoS information of a session of the broadcast service #2.

Specifically, for a manner in which the MB-SMF #b obtains the QoS information of the session of the broadcast service #2, refer to step 504 in the method 500. Details are not described herein again.

Step 603: The MB-SMB #b selects an AMF #b, and sends a session start request (session start request) message to the AMF #b.

Correspondingly, the AMF #b receives the session start request message.

Specifically, for a manner in which the MB-SMB #b selects the AMF #b, refer to step 505 in the method 500. Details are not described herein again.

In this embodiment, the session start request message may further carry one or more of the following information: for example, the identifier TMGI #p of the broadcast service #2 in the PLMN #b, the broadcast area information (for example, cell list (cell list) information or a tracking area list ((tracking area, TA) list)), and the QoS information of the broadcast session.

Step 604: The AMF #b selects a RAN #x (for example, a base station), and sends an N2 request (N2 request) message (an example of a second message) to the RAN #x.

Correspondingly, the RAN #x receives the N2 request message.

Specifically, for a manner in which the AMF #b selects the RAN #x, refer to step 506 in the method 500. Details are not described herein again.

In this embodiment, the N2 request message may further carry one or more of the following information: for example, the identifier TMGI #p of the broadcast service #2 in the PLMN #b, the broadcast area information (for example, the cell list (cell list) information or the tracking area list ((tracking area, TA) list)), and the QoS information of the broadcast session.

In this embodiment, the N2 request message is used for triggering the RAN #x to allocate a resource to the broadcast service #2. In other words, the N2 request message requests the RAN #x to allocate the resource to the broadcast service #2. It may also be understood that the N2 request message requests the RAN #x to establish a session context corresponding to the broadcast service #2.

Step 605: The RAN #x allocates a first resource to the broadcast service #2 based on the N2 request message, and establishes the broadcast session context corresponding to the broadcast service #2.

In this embodiment, the first resource may also be understood as being used for sending data of the broadcast service #2 to UE in the PLMN #b.

In an example, the RAN #x may allocate the corresponding first resource based on the QoS information of the broadcast session. For example, a resource is reserved for a QoS flow (flow) with a guaranteed bit rate (guaranteed bit rate, GBR). Specifically, information that is about the first resource of the broadcast service #2 and that is determined by the RAN #x may include: (1) a multicast received group-radio network temporary identifier (group-radio network temporary identifier, G-RNTI); (2) information about a bandwidth part (bandwidth part, BWP) corresponding to the broadcast service #2, where for example, the service is received in the BWP, and a sub-carrier spacing (sub-carrier spacing, SCS), a frequency domain position, and a cyclic prefix (cyclic prefix, CP) length that correspond to the BWP are determined based on a configuration of the BWP, configuration information of the BWP further includes configuration information of a control resource set (control resource set, CORESET) detected via a physical downlink control channel (physical downlink control channel, PDCCH), and the configuration information of the CORESET indicates a time-frequency resource on which a PDCCH with the G-RNTI is located; (3) a scrambling sequence of a physical downlink data channel (physical downlink data channel, PDSCH) of the broadcast service #2, where it may also be understood that UE uses the sequence to perform descrambling when decoding the PDSCH of the service; (4) a discontinuous reception (discontinuous reception, DRX) parameter of the G-RNTI, where it may also be understood as that the UE uses the DRX parameter to perform G-RNTI detection; (4) a configuration of a demodulation reference signal, where it may also be understood as that the UE uses the reference signal to perform PDSCH demodulation scheduled by using the G-RNTI; and (5) information about a rate matching reference signal.

The broadcast session context that corresponds to the broadcast service #2 and that is established by the RAN #x may further include: the identifier TMGI #p of the broadcast service #2 in the PLMN #b, the broadcast area information (for example, the cell list (cell list) information or the tracking area list ((tracking area, TA) list)), and a QoS context of the broadcast session.

Step 606: The RAN #x sends an N2 response message to the AMF #b.

For example, the RAN #x sends the N2 response message to the AMF #b in response to the N2 request message sent by the AMF #b.

Step 607: The AMF #b sends a session start response message to the MB-SMF #b.

For example, the AMF #b sends the session start response message to the MB-SMF #b in response to the session start request message sent by the MB-SMF #b.

Step 608: The MB-SMF #b configures an MB-UPF #b.

For example, the MB-SMF #b sends an N4 session establishment or modification (N4mb session establishment/modification) message (an example of a fourth message) to the MB-UPF #b. The message may include one or more of the following content: identification information of the broadcast service #2 and indication information #1 (an example of first indication information). The indication information #1 indicates the MB-UPF #b to detect an IP multicast address of the broadcast service #2 (an example of a globally unique identifier of the broadcast service #2). For example, the MB-UPF #b detects an IP multicast address (for example, may be a target IP address or a source IP address) of a downlink data packet of the broadcast service #2. Thereafter, the data of the broadcast service #2 may be transmitted at a core network and the RAN #x.

Step 609: The MB-UPF #b sends a notification message (for example, sends a notification message) to the MB-SMF #b, where the notification message carries the IP multicast address of the broadcast service #2. Correspondingly, the MB-SMF #b receives the notification message.

Step 610: The MB-SMF #b sends the IP multicast address of the broadcast service #2 to the RAN.

For example, the MB-SMF #b first sends the IP multicast address to the AMF #b by invoking an Namf_MBSBroadcast_ContextUpdate service of the AMF, and then the AMF #b sends the IP multicast address to the RAN #x by using an N2 message.

Step 611: The RAN #x stores the IP multicast address of the broadcast service #2 in the broadcast session context established in the PLMN #b.

For example, the RAN #x stores the IP multicast address of the downlink data packet of the broadcast service #2 as a part of the broadcast session context.

The foregoing steps 601 to 611 are a procedure of establishing the broadcast session corresponding to the broadcast service #2 in the PLMN #b, allocating the first resource to the data of the broadcast service #2, and storing the globally unique identifier of the broadcast service #2 in the broadcast session context. The following steps 612 to 622 are a procedure of establishing a broadcast session corresponding to the broadcast service #2 in the PLMN #a and sending the data of the broadcast service #2 to UE in the PLMN #a by using the first resource allocated to the broadcast service #2 in the PLMN #b.

For steps 612 to 615, refer to the descriptions of steps 601 to 604. A difference lies in that steps 612 to 615 are all in the PLMN #a, and related core network elements are also core network elements in the PLMN #a.

Optionally, in step 616, the RAN #x allocates a second resource to the broadcast service #2 based on the N2 request message, and establishes a broadcast session context corresponding to the broadcast service #2.

Specifically, refer to the descriptions of step 605. A difference lies in that in this case, the RAN #x allocates the second resource to the broadcast service #2 in the PLMN #a. Details are not described herein again.

For steps 617 and 618, refer to steps 606 and 607. A difference lies in that steps 617 and 618 are all in the PLMN #a, and related core network elements are also core network elements in the PLMN #a.

Step 619: The MB-SMF #a configures an MB-UPF #a.

For example, the MB-SMF #a sends an N4 session establishment or modification (N4mb session establishment/modification) message (an example of the fourth message) to the MB-UPF #a. The message may include one or more of the following content: the identification information of the broadcast service #2 and indication information #2 (an example of the first indication information). The indication information #2 indicates the MB-UPF #a to detect the IP multicast address of the broadcast service #2 (an example of the globally unique identifier of the broadcast service #2). For example, the MB-UPF #a detects the IP multicast address (for example, may be the target IP address or the source IP address) of the downlink data packet of the broadcast service #2. Thereafter, the data of the broadcast service #2 may be transmitted at the core network and the RAN #x.

Step 620: The MB-UPF #a sends a notification message (for example, sends a notification message) to the MB-SMF #a, where the notification message carries the IP multicast address of the broadcast service #2.

Correspondingly, the MB-SMF #a receives the notification message.

Step 621: The MB-SMF #a sends the IP multicast address of the broadcast service #2 to the RAN #x.

For example, the MB-SMF #a first sends the IP multicast address to the AMF #a by invoking an Namf_MBSBroadcast_ContextUpdate service of the AMF, and then the AMF #a sends the IP multicast address to the RAN #x by using an N2 message.

Step 622: The RAN #x determines, based on the IP multicast address of the broadcast service #2, whether the resource has been allocated to the broadcast service #2. If the RAN #x has allocated the resource to the broadcast service #2, the RAN #x sends the data of the broadcast service #2 in the PLMN #a by using the resource; and/or if the RAN #x has not allocated the resource to the broadcast service #2, the RAN #x allocates the resource to the broadcast service #2.

For the "resource", refer to the related descriptions in the foregoing embodiments. Details are not described again.

In an optional implementation, the RAN #x searches, based on the N2 request message and the globally unique identifier of the broadcast service #2, for example, the IP multicast address of the broadcast service #2, for the broadcast session context corresponding to the broadcast service #2. If the RAN #x determines that the broadcast session context in the PLMN #b already includes the IP multicast address of the broadcast service #2, the RAN #x determines that the resource has been allocated to the broadcast service #2, and finds the information about the first resource in the broadcast session context in the PLMN #b. In this case, the RAN #x may delete ("delete" may also be understood as "release") the second resource allocated to the broadcast service #2 in the PLMN #a, delete the context established for the broadcast service #2 in the PLMN #a, and send the data of the broadcast service #2 in the PLMN #a by using the first resource allocated to the broadcast service #1 in the PLMN #b. Alternatively, the RAN #x may not send the data of the broadcast service #2 in the PLMN #a by using the second resource, but still send the data of the broadcast service #2 in the PLMN #a by using the first resource allocated to the broadcast service #1 in the PLMN #b.

In another optional implementation, the RAN #x does not perform step 616. In this case, the RAN #x does not allocate the second resource to the broadcast service #2 in the PLMN #a, and directly performs steps 617 to 622. In this case, the RAN #x searches, based on the N2 request message and the globally unique identifier of the broadcast service #2, for example, the IP multicast address of the broadcast service #2, for the broadcast session context corresponding to the broadcast service #2. The RAN #x determines that the broadcast session context in the PLMN #b already includes the IP multicast address of the broadcast service #2. In this case, the RAN #x determines that the resource has been allocated to the broadcast service #1, and finds the information about the first resource in the broadcast session context in the PLMN #b. Then, the RAN #x determines not to establish, in the PLMN #a, an air interface resource corresponding to the broadcast service #2, and does not establish, in the PLMN #a, the context corresponding to the broadcast service #2. In other words, the RAN #x determines that the data of the broadcast service #2 in the PLMN #a may be sent by using the first resource in the PLMN #b.

Based on the foregoing technical solution, the globally unique identifier of the broadcast service is sent to the RAN, so that in a scenario in which different operators share a base station, the RAN can identify the same broadcast service. Therefore, the RAN sends the data of the broadcast service in the PLMN #a by using the resource allocated to the broadcast service in the PLMN #b. It may also be understood that the RAN may share the air interface resource for users of the different operators, so that transmission resources of the RAN can be saved, and a waste of air interface resources can be avoided.

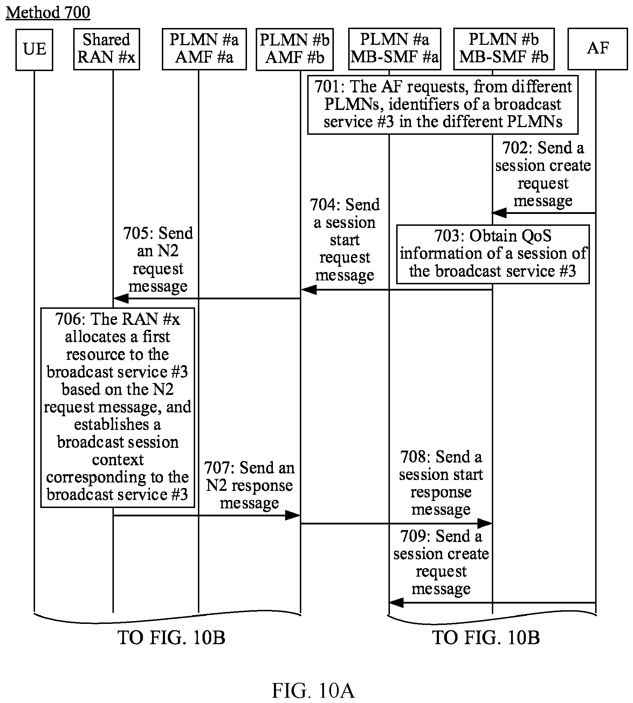

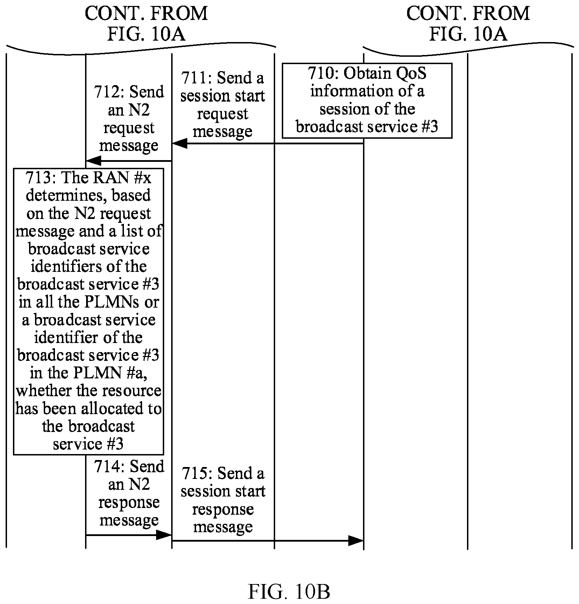

FIG. 10A and FIG. 10B are a schematic flowchart of a broadcast communication method 700 according to this application. It is assumed that there are two PLMNs (denoted as a PLMN #a and a PLMN #b) in this embodiment. In this embodiment, a broadcast service #3 is used as an example for description. The method includes the following steps.

Step 701: An AF requests, from different PLMN networks, identifiers of the broadcast service #3 in the different PLMN networks.

For example, the AF requests an identifier of the broadcast service #3 from an MB-SMF #a in the PLMN #a. It is assumed that the AF obtains that the identifier of the broadcast service #3 in the PLMN #a is a TMGI #m. Similarly, the AF requests an identifier of the broadcast service #3 from an MB-SMF #b in the PLMN #b. It is assumed that the AF obtains that the identifier of the broadcast service #3 in the PLMN #b is a TMGI #n.

Step 702: The AF sends a session create request (session create request) message to the MB-SMF #b in the PLMN #b.

Correspondingly, the MB-SMF #b in the PLMN #b receives the broadcast session create request.

In an optional implementation, the session create request message carries a list (list) of broadcast service identifiers of the broadcast service #3 in all the PLMN networks. For example, the identifier in the PLMN #a is the TMGI #m, and the identifier in the PLMN #b is the TMGI #n.

In another optional implementation, in this application, a list of broadcast service identifiers of the broadcast service #3 in all the PLMN networks may alternatively be pre-configured on a RAN (where the RAN may be, for example, a RAN #x). In this case, the AF does not need to provide the list in the session create request message. "Pre-configured" may be understood as follows: The list of the broadcast service identifiers of the broadcast service #3 in the PLMN networks is configured on the RAN. Therefore, when a broadcast session is requested to be established in each network, only the identifier of the broadcast service #3 in the network may be carried, and the entire list does not need to be carried. Alternatively, "pre-configured" may be understood as follows: The RAN receives the pre-configured list of the identifiers of the broadcast service #3 in the networks when establishing a session of the broadcast service #3 for the first time. In this case, the RAN may store the list. Therefore, when a session of the broadcast service #3 is not requested for the first time (for example, for the second time), only the identifier of the broadcast service #3 in the network may be carried, and the entire list does not need to be carried. Details are not described below.

Specifically, for a manner in which the AF sends the session create request message to the MB-SMF #b in the PLMN #b, refer to step 503 in the method 500. Details are not described herein again.

Step 703: The MB-SMF #b in the PLMN #b obtains QoS information of a session of the broadcast service #3.

Specifically, for a manner in which the MB-SMF #b in the PLMN #b obtains the QoS information of the session of the broadcast service #3, refer to step 504 in the method 500. Details are not described herein again.

Step 704: The MB-SMB #b selects an AMF #b, and sends a session start request (session start request) message to the AMF #b.

Correspondingly, the AMF #b receives the session start request message.

Specifically, for a manner in which the MB-SMF #b in the PLMN #b selects the AMF, refer to step 505 in the method 500. Details are not described herein again.

In this embodiment, the session start request message may carry the list of the broadcast service identifiers of the broadcast service #3 in all the PLMN networks. For example, the identifier in the PLMN #a is the TMGI #m, and the identifier in the PLMN #b is the TMGI #n.

The session start request message may further carry one or more of the following information: for example, the identifier TMGI #n of the broadcast service #3 in the PLMN #b, broadcast area information (for example, cell list (cell list) information or a tracking area list ((tracking area, TA) list)), and the QoS information of the broadcast session.

Step 705: The AMF #b selects a RAN #x (for example, a base station), and sends an N2 request (N2 request) message (an example of a second message) to the RAN #x.

Correspondingly, the RAN #x receives the N2 request message.

Specifically, for a manner in which the AMF #b selects the RAN #x, refer to step 506 in the method 500. Details are not described herein again.

In this embodiment, the N2 request message carries the list of the broadcast service identifiers of the broadcast service #3 in all the PLMN networks. For example, the identifier in the PLMN #a is the TMGI #m, and the identifier in the PLMN #b is the TMGI #n.

The N2 request message may further carry one or more of the following information: for example, the identifier TMGI #n of the broadcast service #3 in the PLMN #b, the broadcast area information (for example, the cell list (cell list) information or the tracking area list ((tracking area, TA) list)), and the QoS information of the broadcast session.

In this embodiment, the N2 request message is used for triggering the RAN to allocate a resource to the broadcast service #3. In other words, the N2 request message requests the RAN #x to allocate the resource to the broadcast service #3. It may also be understood that the N2 request message requests the RAN #x to establish a session context corresponding to the broadcast service #3.

Step 706: The RAN #x allocates a first resource to the broadcast service #3 based on the N2 request message, and establishes the broadcast session context corresponding to the broadcast service #3.

The broadcast session context includes the list of the broadcast service identifiers of the broadcast service #3 in all the PLMN networks. For example, the identifier in the PLMN #a is the TMGI #m, and the identifier in the PLMN #b is the TMGI #n.

In this embodiment, the first resource may also be understood as being used for sending data of the broadcast service #3 to UE in the PLMN #b.

In an example, the RAN #x may allocate the corresponding first resource based on the QoS information of the broadcast session. For example, a resource is reserved for a QoS flow (flow) with a guaranteed bit rate (guaranteed bit rate, GBR). Specifically, the information that is about the first resource of the broadcast service #3 and that is determined by the RAN #x may include: (1) information about a multicast received group-radio network temporary identifier (group-radio network temporary identifier, G-RNTI); (2) information about a bandwidth part (bandwidth part, BWP) corresponding to the broadcast service #3, where for example, the service is received in the BWP, and a sub-carrier spacing (sub-carrier spacing, SCS), a frequency domain position, and a cyclic prefix (cyclic prefix, CP) length that correspond to the BWP are determined based on a configuration of the BWP, configuration information of the BWP further includes configuration information of a control resource set (control resource set, CORESET) detected via a physical downlink control channel (physical downlink control channel, PDCCH), and the configuration information of the CORESET indicates a time-frequency resource on which a PDCCH with the G-RNTI is located; (3) a scrambling sequence of a physical downlink data channel (physical downlink data channel, PDSCH) of the broadcast service #3, where it may also be understood that UE uses the sequence to perform descrambling when decoding the PDSCH of the service; (4) a discontinuous reception (discontinuous reception, DRX) parameter of the G-RNTI, where it may also be understood as that the UE uses the DRX parameter to perform G-RNTI detection; (5) a configuration of a demodulation reference signal, where it may also be understood as that the UE uses the reference signal to perform PDSCH demodulation scheduled by using the G-RNTI; and (6) information about a rate matching reference signal.

The broadcast session context that corresponds to the broadcast service #3 and that is established by the RAN #x may further include: the identifier TMGI #n of the broadcast service #3 in the PLMN #b, the broadcast area information (for example, the cell list (cell list) information or the tracking area list ((tracking area, TA) list)), and a QoS context of the broadcast session.

Step 706 may also be understood as follows: The RAN #x searches for the broadcast session context corresponding to the broadcast service #3 based on the N2 request message and the list of the broadcast service identifiers of the broadcast service #3 in all the PLMN networks. If the RAN #x does not find the broadcast session context including the list of the broadcast service identifiers of the broadcast service #3 in all the PLMN networks, the RAN #x determines that no resource has been allocated to the broadcast service #3, and needs to allocate a resource to the broadcast service #3 in the PLMN #b, and establish the broadcast session context corresponding to the broadcast service #3.

Step 707: The RAN #x sends an N2 response message to the AMF #b.

For example, the RAN #x sends the N2 response message to the AMF #b in response to the N2 request message sent by the AMF #b.

Step 708: The AMF #b sends a session start response message to the MB-SMF #b.

For example, the AMF #b sends the session start response message to the MB-SMF #b in response to the session start request message sent by the MB-SMF #b.

The foregoing steps 702 to 708 are a procedure of establishing the broadcast session corresponding to the broadcast service #3 in the PLMN #b and allocating the first resource to the data of the broadcast service #3. The following steps 709 to 715 are a procedure of establishing a broadcast session corresponding to the broadcast service #3 in the PLMN #a and sending the data of the broadcast service #3 to UE in the PLMN #a by using the first resource allocated to the broadcast service #3 in the PLMN #b.

Step 709: The AF sends a session create request (session create request) message (an example of a fourth message) to the MB-SMF #a in the PLMN #a.

Correspondingly, the MB-SMF #a in the PLMN #a receives the broadcast session create request.

In an optional implementation, the broadcast session create request message carries the list of the broadcast service identifiers of the broadcast service #3 in all the PLMN networks. For example, the identifier in the PLMN #a is the TMGI #m, and the identifier in the PLMN #b is the TMGI #n.

In another optional implementation, if the list of the broadcast service identifiers of the broadcast service #3 in all the PLMN networks has been pre-configured on the RAN (for example, the RAN #x), or because the list has been provided to the RAN in the PLMN #b, in the PLMN #a, the broadcast session create request message may carry only the identifier of the broadcast service #3 in the PLMN #a, for example, the TMGI #m, and the entire list does not need to be provided to the RAN.

Specifically, for a manner in which the AF sends the session create request message to the MB-SMF #a in the PLMN #a, refer to step 510 in the method 500. Details are not described herein again.

Step 710: The MB-SMF #a in the PLMN #a obtains QoS information of a session of the broadcast service #3.

Specifically, for a manner in which the MB-SMF #a in the PLMN #a obtains the QoS information of the session of the broadcast service #3, refer to step 511 in the method 500. Details are not described herein again.

Step 711: The MB-SMB #a selects an AMF network element, and sends a session start request (session start request) message (an example of a third message) to an AMF #a.

Correspondingly, the AMF #a receives the session start request message.

Specifically, for a manner in which the MB-SMF #a in the PLMN #a selects the AMF #a, refer to step 512 in the method 500. Details are not described herein again.

In an optional implementation, the broadcast session start request message carries the list of the broadcast service identifiers of the broadcast service #3 in all the PLMN networks. For example, the identifier in the PLMN #a is the TMGI #m, and the identifier in the PLMN #b is the TMGI #n.

In another optional implementation, if the list of the broadcast service identifiers of the broadcast service #3 in all the PLMN networks has been pre-configured on the RAN (for example, the RAN #x), or because the list has been provided to the RAN in the PLMN #b, in the PLMN #a, the broadcast session start request message may carry only the identifier of the broadcast service #3 in the PLMN #a, for example, the TMGI #m, and the entire list does not need to be provided to the RAN.

Step 712: The AMF #a selects the RAN #x (for example, the base station), and sends an N2 request (N2 request) message (an example of a second message) to the RAN #x.

Correspondingly, the RAN #x receives the N2 request message.

Specifically, for a manner in which the AMF #a selects the RAN #x, refer to step 513 in the method 500. Details are not described herein again.

In an optional implementation, the N2 request includes the list of the broadcast service identifiers of the broadcast service #3 in all the PLMN networks. For example, the identifier in the PLMN #a is the TMGI #m, and the identifier in the PLMN #b is the TMGI #n.

In another optional implementation, the N2 request carries the broadcast service identifier of the broadcast service #3 in the PLMN #a network. For example, the identifier in the PLMN #a is the TMGI #m.

The N2 request message may further carry one or more of the following information: for example, the identifier TMGI #n of the broadcast service #3 in the PLMN #b, the broadcast area information (for example, the cell list (cell list) information or the tracking area list ((tracking area, TA) list)), and the QoS information of the broadcast session.

Step 713: The RAN #x determines, based on the N2 request message and the list of the broadcast service identifiers of the broadcast service #3 in all the PLMN networks or the broadcast service identifier of the broadcast service #3 in the PLMN #a network, whether the resource has been allocated to the broadcast service #3. If the RAN #x has allocated the resource to the broadcast service #3, the RAN #x sends the data of the broadcast service #3 in the PLMN #a by using the resource; and/or if the RAN #x has not allocated the resource to the broadcast service #3, the RAN #x allocates the resource to the broadcast service #3.

For the "resource", refer to the related descriptions in the foregoing embodiments. Details are not described again.

In an optional implementation, the RAN #x searches, based on the N2 request message and the list of the broadcast service identifiers of the broadcast service #3 in all the PLMN networks, for example, the identifier in the PLMN #a is the TMGI #m, and the identifier in the PLMN #b is the TMGI #n, the broadcast session context corresponding to the broadcast service #3. If the RAN #x determines that the broadcast session context in the PLMN #b already includes the list of the broadcast service identifiers of the broadcast service #3 in all the PLMN networks, the RAN #x determines that the resource has been allocated to the broadcast service #3, and finds the information about the first resource in the broadcast session context in the PLMN #b. The RAN #x determines not to set up an air interface resource corresponding to the broadcast service #3 in the PLMN #a, and does not set up a context corresponding to the broadcast service #3 in the PLMN #a. In other words, the RAN #x determines that the data of the broadcast service #3 in the PLMN #a may be sent by using the first resource in the PLMN #b.

In another optional implementation, the RAN #x searches, based on the N2 request message and the broadcast service TMGI #m of the broadcast service #3 in the PLMN #a network, for the broadcast session context corresponding to the broadcast service #3. If the RAN #x determines that the broadcast service identifier TMGI #m of the broadcast service #3 in the PLMN #a network has been included in the broadcast session context in the PLMN #b. In this case, the RAN #x determines that the resource has been allocated to the broadcast service #3, and finds the information about the first resource in the broadcast session context in the PLMN #b. The RAN #x determines not to set up an air interface resource corresponding to the broadcast service #3 in the PLMN #a, and does not set up a context corresponding to the broadcast service #3 in the PLMN #a. In other words, the RAN #x determines that the data of the broadcast service #3 in the PLMN #a may be sent by using the first resource in the PLMN #b.

It may also be understood that, when the RAN #x searches for the broadcast session context corresponding to the broadcast service #3, if the RAN #x finds that the broadcast service identifier that corresponds to the broadcast service #3 in each network and that is stored in the context has an intersection with the identifier that is of the broadcast service #3 and that is carried in the N2 request message, the RAN #x determines that the resource has been allocated to the broadcast service #3 and finds the information about the first resource in the broadcast session context in the PLMN #b. The RAN #x determines not to set up an air interface resource corresponding to the broadcast service #3 in the PLMN #a, and does not set up a context corresponding to the broadcast service #3 in the PLMN #a. In other words, the RAN #x determines that the data of the broadcast service #3 in the PLMN #a may be sent by using the first resource in the PLMN #b.

In still another optional implementation, before the RAN #x searches for the list of the broadcast service identifiers of the broadcast service #3 in all the PLMN networks or the broadcast service identifier in the PLMN #a network, if the RAN #x has allocated a second resource to the broadcast service #3 in the PLMN #a, and has established a context for the broadcast service #3 in the PLMN #a, after the searching, the RAN #x determines that the resource has been previously allocated to the broadcast service #3 in the PLMN #b, and finds the information about the first resource in the broadcast session context in the PLMN #b. In this case, the RAN #x may delete ("delete" may also be understood as "release") the second resource allocated to the broadcast service #3 in the PLMN #a, delete the context established for the broadcast service #3 in the PLMN #a; or the RAN #x may not send the data of the broadcast service #3 in the PLMN #a by using the second resource, but send the data of the broadcast service #3 in the PLMN #a by using the first resource allocated to the broadcast service #3 in the PLMN #b.

Step 714: The RAN #x sends an N2 response message to the AMF #a.

For example, the RAN #x sends the N2 response message to the AMF #a in response to the N2 request message sent by the AMF #a.

Step 715: The AMF #a sends a session start response message to the MB-SMF #a.

For example, the AMF #a sends the session start response message to the MB-SMF #a in response to the session start request message sent by the MB-SMF #a.

Based on the foregoing technical solution, the identifier of the broadcast service in each PLMN or the identifier of the broadcast service in the PLMN #a is sent to the RAN, so that in a scenario in which different operators share a base station, the RAN can identify the same broadcast service. Therefore, the RAN sends the data of the broadcast service in the PLMN #a by using the resource allocated to the broadcast service in the PLMN #b. It may also be understood that the RAN may share the air interface resource for users of the different operators, so that transmission resources of the RAN can be saved, and a waste of air interface resources can be avoided.

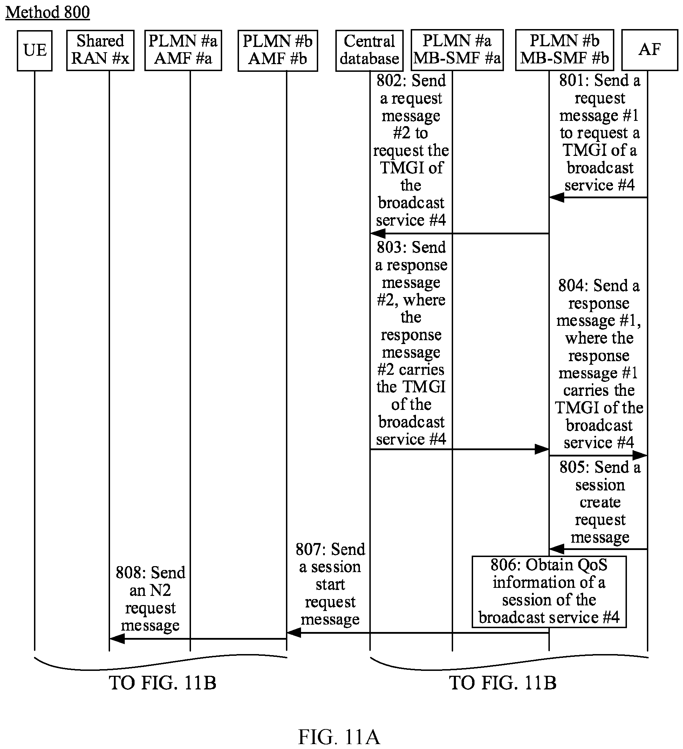

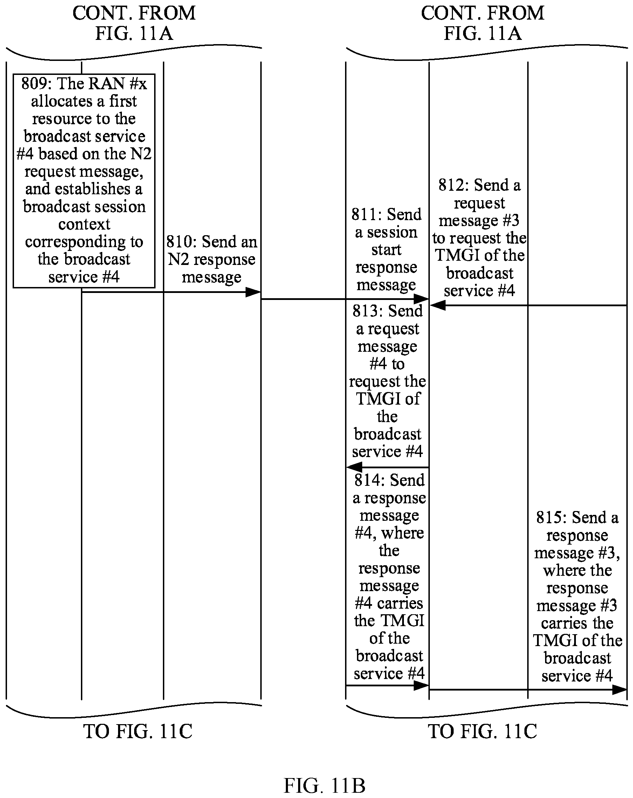

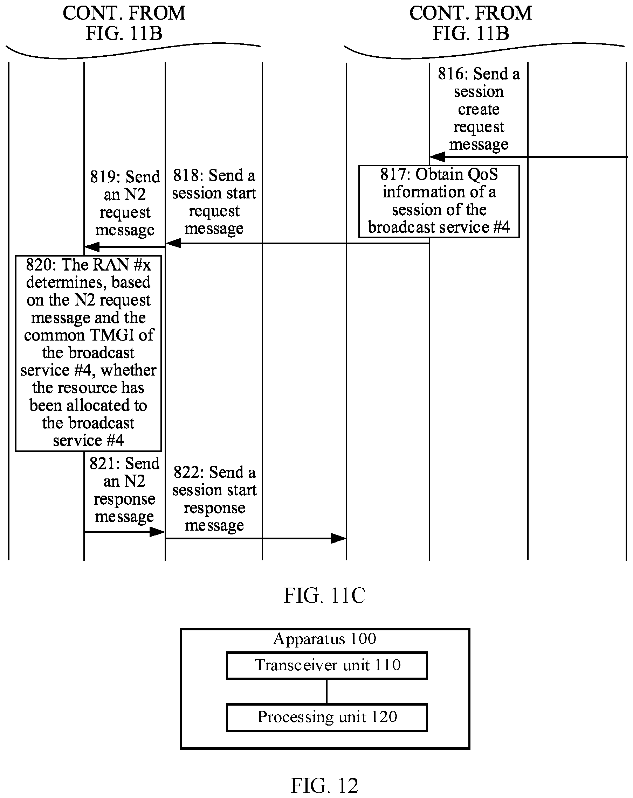

FIG. 11A, FIG. 11B, and FIG. 11C are a schematic flowchart of a broadcast communication method 800 according to this application. It is assumed that there are two PLMNs (denoted as a PLMN #a and a PLMN #b) in this embodiment. In this embodiment, a broadcast service #4 is used as an example for description. The method includes the following steps.

In this embodiment, it is assumed that a common TMGI is configured for the PLMN #a and the PLMN #b, so that when an AF requests a TMGI, MB-SMFs in the PLMN #a and the PLMN #b can provide the common TMGI. In this application, the "common TMGI" means that one or more TMGIs may be shared by several (that is, at least two) PLMN networks. In an original definition, a TMGI includes PLMN ID information and information inside a PLMN. It may also be understood that the TMGI is specific in each PLMN (namely, PLMN-specific). However, in this embodiment, it is assumed that each PLMN may share a TMGI (where the TMGI may be PLMN-specific or non-PLMN specific, but may be shared in each PLMN). For example, for a broadcast service #4, a TMGI in the PLMN # a and a TMGI in the PLMN # b are the same, and both are TMGI #q.

In this embodiment, it is further assumed that there is a "central database" (an example of a first network element), and the central database stores a correspondence between each broadcast service identifier and the common TMGI. For example, an MB-SMF of each network may store a correspondence between a TMGI and a broadcast service identifier in a UDM, a UDR, an NRF, an NEF, a PCF, or a database dedicated to multicast/broadcast (the multicast/broadcast database may be shared by a plurality of PLMNs). In this way, a common TMGI for a broadcast service identifier can be directly requested from the central database subsequently.

Step 801: The AF sends a request message # 1 (an example of a third message) to an MB-SMF #b in the PLMN #b, where the request message # 1 carries an identifier of the broadcast service # 4 (for example, an IP multicast address of the broadcast service # 4), and the request message # 1 requests the TMGI of the broadcast service # 4. Correspondingly, the MB-SMF #b receives the request message.

Specifically, the request message # 1 may be used for triggering the MB-SMF #b to send the TMGI of the broadcast service # 4 to the AF.

For example, the AF sends a TMGI allocation request (TMGI allocation request) message to the MB-SMF #b, to request the TMGI of the broadcast service # 4.

Step 802: The MB-SMF #b sends a request message # 2 (an example of the fifth message) to the central database, where the request message # 2 carries the identifier of the broadcast service # 4, to obtain the TMGI of the broadcast service # 4.

Specifically, the request message # 2 may be used for triggering the central database to send the TMGI of the broadcast service # 4.

For example, the request message # 2 may be a session create request (session create request) message, requesting to search for the TMGI of the broadcast service # 4. In addition, the request message # 2 may also be a TMGI allocation request (TMGI allocation request) message, or a TMGI query request (TMGI query request) message, which is not limited herein.

In an optional implementation, when the MB-SMF #b allocates the TMGI, the MB-SMF #b may search the central database for the TMGI of the broadcast service # 4, to obtain that the common TMGI corresponding to the broadcast service # 4 is the TMGI #q.

In another optional implementation, when the MB-SMF #b allocates the TMGI, the MB-SMF #b may search the central database for the TMGI of the broadcast service # 4. If the MB-SMF #b does not find the TMGI of the broadcast service # 4, the MB-SMF #b allocates the TMGI (for example, the allocated TMGI is TMGI #q) to the broadcast service # 4, and stores the TMGI in the central database.

Step 803: The central database sends a response message #2 for the request message #2 to the MB-SMF #b, where the response message #2 carries the common TMGI, namely, the TMGI #q, of the broadcast service #4.

Step 804: The MB-SMF #b sends a response message #1 for the request message #1 to the AF, where the response message #1 carries the common TMGI of the broadcast service #4, for example, the TMGI #q.

For example, the response message #1 is a TMGI allocation response (allocation response) message.

Step 805: The AF sends a session create request (session create request) message to the MB-SMF #b in the PLMN #b. Correspondingly, the MB-SMF #b in the PLMN #b receives the broadcast session create request.

The session create request message carries the common TMGI corresponding to the broadcast service #4, for example, the TMGI #q.

Specifically, the session create request message sent by the AF to the MB-SMF #b may further carry one or more of the following information: for example, requirement information of the broadcast service #4 and broadcast area information.

The requirement information of the broadcast service #4 may include, for example, a delay requirement of the broadcast service #4, a priority requirement of the broadcast service #4, and a bandwidth requirement of the broadcast service #4. Alternatively, the requirement information of the broadcast service #2 may alternatively be broadcast policy information, for example, a 5G quality of service (quality of service, QoS) identifier (identifier) (namely, a 5QI), allocation and retention priority (allocation and retention priority, ARP) information, or the like.

Specifically, for an implementation in which the AF sends the session create request message to the MB-SMF #b in the PLMN #b, refer to step 503 in the method 500. Details are not described herein again.

Step 806: The MB-SMF #b in the PLMN #b obtains QoS information of a session of the broadcast service #4.

Specifically, for a manner in which the MB-SMF #b in the PLMN #b obtains the QoS information of the session of the broadcast service #4, refer to step 504 in the method 500. Details are not described herein again.

Step 807: The MB-SMB #b selects an AMF #b, and sends a session start request (session start request) message to the AMF #b. Correspondingly, the AMF #b receives the session start request message.

Specifically, for a manner in which the MB-SMF #b in the PLMN #b selects the AMF, refer to step 505 in the method 500. Details are not described herein again.

Specifically, the session start request message carries the common TMGI corresponding to the broadcast service #4, for example, the TMGI #q.

The session start request message may further carry one or more of the following information: broadcast area information (for example, cell list (cell list) information or a tracking area list ((tracking area, TA) list)), and QoS information of the broadcast session.

Step 808: The AMF #b selects a RAN #x (for example, a base station), and sends an N2 request (N2 request) message (an example of a second message) to the RAN. Correspondingly, the RAN #x receives the N2 request message.

Specifically, for a manner in which the AMF #b selects the RAN #x, refer to step 506 in the method 500. Details are not described herein again.

In this embodiment, the N2 request message carries the common TMGI corresponding to the broadcast service #4, for example, the TMGI #q.

The N2 request message may further carry one or more of the following information: the broadcast area information (for example, the cell list (cell list) information or the tracking area list ((tracking area, TA) list)), and the QoS information of the broadcast session.

In this embodiment, the N2 request message is used for triggering the RAN #x to allocate a resource to the broadcast service #4. In other words, the N2 request message requests the RAN #x to allocate the resource to the broadcast service #4. It may also be understood that the N2 request message requests the RAN #x to establish a session context corresponding to the broadcast service #4.

Step 809: The RAN #x allocates a first resource to the broadcast service #4 based on the N2 request message, and establishes the broadcast session context corresponding to the broadcast service #4.

The broadcast session context includes the common TMGI corresponding to the broadcast service #4, for example, the TMGI #q.

The first resource may also be understood as being used for sending data of the broadcast service #4 to UE in the PLMN #b.

In an example, the RAN #x may allocate the corresponding first resource based on the QoS information of the broadcast session. For example, a resource is reserved for a QoS flow (flow) with a guaranteed bit rate (guaranteed bit rate, GBR). Specifically, information that is about the first resource of the broadcast service #1 and that is determined by the RAN #x may include: (1) information about a multicast received group radio network temporary identifier (group-radio network temporary identifier, G-RNTI). (2) information about a bandwidth part (bandwidth part, BWP) corresponding to the broadcast service #4, where for example, the service is received in the BWP, and a sub-carrier spacing (sub-carrier spacing, SCS), a frequency domain position, and a cyclic prefix (cyclic prefix, CP) length that correspond to the BWP are determined based on a configuration of the BWP, configuration information of the BWP further includes configuration information of a control resource set (control resource set, CORESET) detected via a physical downlink control channel (physical downlink control channel, PDCCH), and the configuration information of the CORESET indicates a time-frequency resource on which a PDCCH with the G-RNTI is located; (3) a scrambling sequence of a physical downlink data channel (physical downlink data channel, PDSCH) of the broadcast service #4, where it may also be understood that UE uses the sequence to perform descrambling when decoding the PDSCH of the service; (4) a discontinuous reception (discontinuous reception, DRX) parameter of the G-RNTI, where it may also be understood as that the UE uses the DRX parameter to perform G-RNTI detection; (5) a configuration of a demodulation reference signal, where it may also be understood as that the UE uses the reference signal to perform PDSCH demodulation scheduled by using the G-RNTI; and (6) information about a rate matching reference signal.

The broadcast session context that corresponds to the broadcast service #4 and that is established by the RAN #x may further include the broadcast area information (for example, the cell list (cell list) information or the tracking area list ((tracking area, TA) list)), and a QoS context of the broadcast session.

Step 809 may also be understood as follows: The RAN #x searches, based on the N2 request message and the common TMGI, namely, the TMGI #q, corresponding to the broadcast service #4, for the broadcast session context corresponding to the broadcast service #4. If the RAN #x does not find the context that is of the broadcast session and that includes the TMGI #q, the RAN #x determines that no resource has been allocated to the broadcast service #4, and needs to allocate a resource to the broadcast service #4 in the PLMN #b, and establishes the broadcast session context corresponding to the broadcast service #4.

Step 810: The RAN #x sends an N2 response message to the AMF #b.

For example, the RAN #x sends the N2 response message to the AMF #b in response to the N2 request message sent by the AMF #b.

Step 811: The AMF #b sends a session start response message to the MB-SMF #b.

For example, the AMF #b sends the session start response message to the MB-SMF #b in response to the session start request message sent by the MB-SMF #b.

The foregoing steps 801 to 811 are a procedure of establishing the broadcast session corresponding to the broadcast service #4 in the PLMN #b and allocating the first resource to the data of the broadcast service #4. The following steps 812 to 822 are a procedure of establishing a broadcast session corresponding to the broadcast service #4 in the PLMN #a and sending the data of the broadcast service #4 to UE in the PLMN #a by using the first resource allocated to the broadcast service #4 in the PLMN #b.

Step 812: The AF sends a request message #3 (an example of the fifth message) to an MB-SMF #a in the PLMN #a, to request the TMGI of the broadcast service #4. Correspondingly, the MB-SMF #a receives the request message.

Specifically, the request message #3 may be used for triggering the MB-SMF #a to send, to the AF, the common TMGI corresponding to the broadcast service #4.

For example, the AF sends a TMGI allocation request (TMGI allocation request) message to the MB-SMF #a, to request the TMGI of the broadcast service #4.

Step 813: The MB-SMF #a sends a request message #4 (an example of a seventh message) to the central database, to obtain the TMGI of the broadcast service #4.

Specifically, for a manner in which the MB-SMF #a obtains the TMGI of the broadcast service #4, refer to step 802. Details are not described herein again.

Step 814: The central database sends a response message #4 for the request message #4 to the MB-SMF #a, where the response message #4 carries the common TMGI, namely, the TMGI #q, of the broadcast service #4.

Step 815: The MB-SMF #a sends a response message #3 for the request message #3 to the AF, where the response message #3 carries the common TMGI of the broadcast service #4, for example, the TMGI #q.

For example, the response message #1 is an allocation request (allocation request) message.

Step 816: The AF sends a session create request (session create request) message to the MB-SMF #a in the PLMN #a. Correspondingly, the MB-SMF #a in the PLMN #a receives the broadcast session create request.

Specifically, the session create request message carries the common TMGI corresponding to the broadcast service #4, for example, the TMGI #q.

Specifically, the session create request message sent by the AF to the MB-SMF #a may further carry one or more of the following information: for example, the requirement information of the broadcast service #4 and the broadcast area information.

The requirement information of the broadcast service #4 may include, for example, the delay requirement of the broadcast service #4, the priority requirement of the broadcast service #4, and the bandwidth requirement of the broadcast service #4. Alternatively, the requirement information of the broadcast service #4 may alternatively be the broadcast policy information, for example, the 5G quality of service (quality of service, QoS) identifier (identifier) (namely, the 5QI), the allocation and retention priority (allocation and retention priority, ARP) information, or the like.

Specifically, for an implementation in which the AF sends the session create request message to the MB-SMF #a in the PLMN #a, refer to step 510 in the method 500. Details are not described herein again.

Step 817: The MB-SMF #a in the PLMN #a obtains QoS information of a session of the broadcast service #4.

Specifically, for a manner in which the MB-SMF #a obtains the QoS information of the session of the broadcast service #4, refer to step 511 in the method 500. Details are not described herein again.

Step 818: The MB-SMB #a selects an AMF #a network element, and sends a session start request (session start request) message (an example of the third message) to the AMF #a. Correspondingly, the AMF #a receives the session start request message.

Specifically, for a manner in which the MB-SMB #a selects the AMF #a, refer to step 512 in the method 500.

Specifically, the session start request message carries the common TMGI of the broadcast service #4, for example, the TMGI #q.

The session start request message may further carry one or more of the following information: the broadcast area information (for example, the cell list (cell list) information or the tracking area list ((tracking area, TA) list)), and the QoS information of the broadcast session.

Step 819: The AMF #a selects the RAN #x (for example, the base station), and sends an N2 request (N2 request) message (an example of a first message) to the RAN.

Correspondingly, the RAN receives the N2 request message.

Specifically, for a manner in which the AMF #a selects the RAN #x, refer to step 513 in the method 500.

The session start request message carries the common TMGI of the broadcast service #4, for example, the TMGI #q.

The session create request message sent by the AF to the MB-SMF #a may further carry one or more of the following information: for example, the requirement information of the broadcast service #4 and the broadcast area information.

The requirement information of the broadcast service #4 may include, for example, the delay requirement of the broadcast service #4, the priority requirement of the broadcast service #4, and the bandwidth requirement of the broadcast service #4. Alternatively, the requirement information of the broadcast service #4 may alternatively be the broadcast policy information, for example, the 5G quality of service (quality of service, QoS) identifier (identifier) (namely, the 5QI), the allocation and retention priority (allocation and retention priority, ARP) information, or the like.

Step 820: The RAN #x determines, based on the N2 request message and the common TMGI of the broadcast service #4, whether a resource has been allocated to the broadcast service #4. If the RAN #x has allocated the resource to the broadcast service #4, the RAN #x sends the data of the broadcast service #4 in the PLMN #a by using the resource; and/or if the RAN #x has not allocated the resource to the broadcast service #4, the RAN #x allocates the resource to the broadcast service #4.

In an optional implementation, because the first resource has been allocated to a first broadcast service (namely, the broadcast service identified by the TMGI #q) in the PLMN #b, the RAN #x determines, based on the N2 request message and the common TMGI of the broadcast service #4, for example, the TMGI #q, that the data of the broadcast service #4 in the PLMN #a may be sent by using the first resource in the PLMN #b. In other words, in this embodiment, because the RAN #x receives the TMGI #q in both the PLMN #b and the PLMN #a, the RAN #x can directly use the first resource in the PLMN #b to send the data of the broadcast service #4 in the PLMN #a without searching for the broadcast session context corresponding to the first broadcast service.

Step 821: The RAN #x sends an N2 response message to the AMF #a.

For example, the RAN #x sends the N2 response message to the AMF #a in response to the N2 request message sent by the AMF #a.

Step 822: The AMF #a sends a session start response message to the MB-SMF #a.

For example, the AMF #a sends the session start response message to the MB-SMF #a in response to the session start request message sent by the MB-SMF #a.

Based on the foregoing technical solution, the common TMGI of the broadcast service in each network is sent to the RAN, so that in a scenario in which different operators share a base station, the RAN can identify the same broadcast service. Therefore, the RAN sends the data of the broadcast service in the PLMN #a by using the resource allocated to the broadcast service in the PLMN #b. It may also be understood that the RAN may share the air interface resource for users of the different operators, so that transmission resources of the RAN can be saved, and a waste of air interface resources can be avoided.

It may be understood that the examples in FIG. 4 to FIG. 8B in embodiments of this application are merely intended to help a person skilled in the art understand embodiments of this application, but are not intended to limit embodiments of this application to specific scenarios in the examples. A person skilled in the art can apparently make various equivalent modifications or changes based on the examples shown in FIG. 4 to FIG. 8B, and such modifications or changes also fall within the scope of embodiments of this application.

It can be further understood that some optional features in embodiments of this application may not depend on another feature in some scenarios, or may be combined with another feature in some scenarios. This is not limited.

It may be further understood that embodiments described in this application may be independent solutions, or may be combined based on internal logic. These solutions all fall within the protection scope of this application. In addition, explanations or descriptions of the terms in embodiments may be mutually referenced or explained in embodiments. This is not limited.

It can be further understood that values of various numeric sequence numbers in embodiments of this application do not mean execution sequences, are merely for differentiation for ease of description, and should not constitute any limitation on an implementation process of embodiments of this application. For example, in the method 500, step 503 and step 510 may be performed simultaneously, to be specific, the AF may simultaneously receive the session create request of the broadcast service sent by the MB-SMF #b in the PLMN #b and the MB-SMF #a in the PLMN #a.

The "broadcast service" and the "broadcast session" in this application may also be understood as a "multicast service" and a "multicast session". The foregoing technical solutions are described only by using the "broadcast service" and the "broadcast session" as an example. This is not limited.

It may be further understood that some message names are involved in embodiments of this application, and the names do not limit the protection scope of embodiments of this application.

It may be understood that "predefine" in this application may be understood as "define", "pre-define", "store", "pre-store", "pre-negotiate", "pre-configure", "build into", or "pre-burn".

It may be understood that, in this application, "when" and "if" mean that an apparatus performs corresponding processing in an objective situation, and are not intended to limit time. The terms do not mean that the apparatus is required to have a determining action during implementation, and do not mean any other limitation.

It may be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

The foregoing mainly describes the solutions provided in embodiments of this application from a perspective of interaction between the nodes. It may be understood that to implement the foregoing functions, each node, for example, each of the radio access network device, the multicast/broadcast session management function network element, the application management function network element, or the first network element includes a corresponding hardware structure and/or software module for implementing each function. A person skilled in the art should be able to be aware that, in combination with the examples described in embodiments disclosed in this specification, units and algorithm steps can be implemented by hardware or a combination of hardware and computer hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the radio access network device and various core network elements may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In an actual implementation, another division manner may be used. An example in which each functional module is obtained through division based on each corresponding function is used below for description.

FIG. 12 is a schematic block diagram of a communication apparatus 100 according to an embodiment of this application. As shown in the figure, the apparatus 100 may include a transceiver unit 110 and a processing unit 120.

In a possible design, the apparatus 100 may be the radio access network device in the foregoing method embodiments, or may be a chip configured to implement the function of the radio access network device in the foregoing method embodiments. It should be understood that the apparatus 100 may correspond to the radio access network device in the method 100, the method 500, the method 600, the method 700, and the method 800 according to embodiments of this application. The apparatus 100 may perform the steps corresponding to the radio access network device in the method 100, the method 500, the method 600, the method 700, and the method 800 in embodiments of this application.

In an implementation, the transceiver unit 110 is configured to receive a first message from a first access and mobility management function network element, where the first message carries an identifier of a first broadcast service, and the first message is used for triggering allocation of a resource to the first broadcast service; and the processing unit 120 is configured to obtain, based on the identifier of the first broadcast service, information about a first resource corresponding to the first broadcast service, where the first resource is used for sending data of the first broadcast service to a terminal device in a second network. The transceiver unit 110 is further configured to send the data of the first broadcast service to a terminal device in a first network by using the first resource. The apparatus is shared by at least two networks, the at least two networks include the first network and the second network, and the first access and mobility management function network element is located in the first network.

Optionally, the identifier of the first broadcast service includes a first identifier and/or a second identifier, and the first identifier includes at least one of the following: a globally unique identifier of the first broadcast service; an identifier of the first broadcast service in each of the at least two networks; or a temporary mobile group identity of the first broadcast service, where the temporary mobile group identity is shared by the at least two networks; and the second identifier includes an identifier of the first broadcast service in the first network.

Optionally, the globally unique identifier of the first broadcast service includes an internet protocol IP multicast address of the first broadcast service.

In an implementation, when the identifier of the first broadcast service is the globally unique identifier of the first broadcast service, that the processing unit 120 is configured to obtain, based on the identifier of the first broadcast service, information about a first resource corresponding to the first broadcast service includes: The processing unit 120 is configured to search, based on the globally unique identifier of the first broadcast service, for a broadcast session context corresponding to the first broadcast service; and the processing unit 120 is configured to obtain the information about the first resource based on the broadcast session context, where the broadcast session context includes the globally unique identifier of the first broadcast service and the information about the first resource.

Optionally, when the identifier of the first broadcast service is the identifier of the first broadcast service in each of the at least two networks, that the processing unit 120 is configured to obtain, based on the identifier of the first broadcast service, information about a first resource corresponding to the first broadcast service includes: The processing unit 120 is configured to search, based on the identifier of the first broadcast service in each of the at least two networks, for a broadcast session context corresponding to the first broadcast service; and the processing unit 120 is configured to obtain the information about the first resource based on the broadcast session context, where the broadcast session context includes the identifier of the first broadcast service in each of the at least two networks and the information about the first resource.

Optionally, when the identifier of the first broadcast service includes the second identifier, that the processing unit 120 is configured to obtain, based on the identifier of the first broadcast service, information about a first resource corresponding to the first broadcast service includes: The processing unit 120 is configured to obtain an identifier of the first broadcast service in the second network based on the second identifier and a pre-configured correspondence between the identifier of the first broadcast service in the first network and the identifier of the first broadcast service in the second network; the processing unit 120 is configured to search, based on the identifier of the first broadcast service in the second network, for a broadcast session context corresponding to the first broadcast service; and the processing unit 120 is configured to obtain the information about the first resource based on the broadcast session context.

Optionally, when the identifier of the first broadcast service includes the first identifier, the transceiver unit 110 is further configured to receive a second message from a second access and mobility management function network element, where the second message carries the first identifier, the second message is used for triggering allocation of a resource to the first broadcast service, and the second access and mobility management function network element is located in the second network in the at least two networks; the processing unit 120 is configured to allocate the first resource to the first broadcast service based on the second message; and the processing unit 120 is configured to establish the broadcast session context corresponding to the first broadcast service, where the broadcast session context includes the first identifier and the information about the first resource.

In a possible design, the apparatus 100 may be the multicast/broadcast session management function network element in the foregoing method embodiments, or may be a chip configured to implement the function of the multicast/broadcast session management function network element in the foregoing method embodiments. It should be understood that the apparatus 100 may correspond to the multicast/broadcast session management function network element in the method 200, the method 500, the method 600, the method 700, and the method 800 according to embodiments of this application. The apparatus 100 may perform the steps corresponding to the multicast/broadcast session management function network element in the method 200, the method 500, the method 600, the method 700, and the method 800 in embodiments of this application.

In an implementation, the transceiver unit 110 is configured to receive an identifier of a first broadcast service, and the transceiver unit 110 is further configured to send the identifier of the first broadcast service.

Optionally, the identifier of the first broadcast service includes a first identifier, and the first identifier includes at least one of the following: a globally unique identifier of the first broadcast service; an identifier of the first broadcast service in each of at least two networks; or a temporary mobile group identity of the first broadcast service, where the temporary mobile group identity is shared by at least two networks.

Optionally, the globally unique identifier of the first broadcast service includes an internet protocol IP multicast address of the first broadcast service.

Optionally, that the transceiver unit 110 is configured to receive an identifier of a first broadcast service includes: The transceiver unit 110 is configured to receive the identifier of the first broadcast service from an application function network element.

Optionally, before the transceiver unit 110 receives the identifier of the first broadcast service from the application function network element, the transceiver unit 110 is further configured to receive a third message from the application function network element, where the third message carries the identifier of the first broadcast service, and the third message is used for triggering the multicast/broadcast session management function network element to send the temporary mobile group identity of the first broadcast service to the application function network element; the processing unit 120 is configured to obtain the temporary mobile group identity from a first network element based on the third message; or the processing unit 120 is configured to allocate the temporary mobile group identity to the first broadcast service based on the third message; and the transceiver unit 110 is configured to send the temporary mobile group identity.

Optionally, the first network element is a unified data management network element, a unified data storage network element, a network repository function network element, a network discovery function network element, a policy control function network element, or a multicast/broadcast database, where the multicast/broadcast database is shared by at least two networks.

Optionally, that the transceiver unit 110 is configured to receive an identifier of a first broadcast service includes: The transceiver unit 110 is configured to receive the identifier of the first broadcast service, where the identifier of the first broadcast service is the globally unique identifier of the first broadcast service.

Optionally, before the transceiver unit 110 receives the identifier of the first broadcast service, the transceiver unit 110 is further configured to send a fourth message, where the fourth message requests establishment or modification of a session of the first broadcast service, the fourth message carries first indication information, and the first indication information is used for triggering the processing unit 120 to detect the identifier of the first broadcast service.

In a possible design, the apparatus 100 may be the application function network element in the foregoing method embodiments, or may be a chip configured to implement the function of the application function network element in the foregoing method embodiments. It should be understood that the apparatus 100 may correspond to the application function network element in the method 300, the method 500, the method 600, the method 700, and the method 800 according to embodiments of this application. The apparatus 100 may perform the steps corresponding to the application function network element in the method 300, the method 500, the method 600, the method 700, and the method 800 in embodiments of this application.

In an implementation, the processing unit 120 is configured to obtain an identifier of a first broadcast service; and the transceiver unit 110 is configured to send the identifier of the first broadcast service.

Optionally, the identifier of the first broadcast service includes a first identifier, and the first identifier includes at least one of the following: a globally unique identifier of the first broadcast service; an identifier of the first broadcast service in each of at least two networks; or a temporary mobile group identity of the first broadcast service, where the temporary mobile group identity is shared by at least two networks.

Optionally, the globally unique identifier of the first broadcast service includes an internet protocol IP multicast address of the first broadcast service.

Optionally, that the processing unit 120 is configured to obtain an identifier of a first broadcast service includes: The processing unit 120 is configured to generate the globally unique identifier of the first broadcast service.

Optionally, the at least two networks include a first network and a second network, and that the processing unit 120 is configured to obtain an identifier of a first broadcast service includes: The processing unit 120 is configured to indicate the transceiver unit 110 to receive an identifier of the first broadcast service in the first network from a first multicast/broadcast session management function network element in the first network; and the processing unit 120 is configured to indicate the transceiver unit 110 to receive an identifier of the first broadcast service in the second network from a second multicast/broadcast session management function network element in the second network.

That the processing unit 120 is configured to obtain an identifier of a first broadcast service includes: The processing unit 120 is configured to obtain the temporary mobile group identity from the multicast/broadcast session management function network element.

In a possible design, the apparatus 100 may be the first network element in the foregoing method embodiments, or may be a chip configured to implement the function of the first network element in the foregoing method embodiments. It should be understood that the apparatus 100 may correspond to the first network element (for example, a central database) in the method 400 and the central database in the method 800 in embodiments of this application. The apparatus 100 may perform the steps corresponding to the functional network element of the first network element in the method 400 in embodiments of this application, or may perform the steps corresponding to the central database in the method 800.

In an implementation, the transceiver unit 110 is configured to receive a fifth message, where the fifth message carries an identifier of a first broadcast service, and the fifth message is used for triggering the apparatus to send a temporary mobile group identity of the first broadcast service; and the processing unit 120 is configured to indicate, based on the fifth message, the transceiver unit 110 to send the temporary mobile group identity of the first broadcast service.

Optionally, the transceiver unit 110 is further configured to receive a correspondence between the identifier of the first broadcast service and the temporary mobile group identity from a multicast/broadcast session management function network element.

Optionally, the temporary mobile group identity is shared by at least two networks.

Optionally, the first network element is a unified data management network element, a unified data storage network element, a network repository function network element, a network discovery function network element, a policy control function network element, or a multicast/broadcast database, where the multicast/broadcast database is shared by at least two networks.

It should be further understood that the apparatus 100 is presented in a form of a functional unit. The term "unit" herein may refer to an application-specific integrated circuit (application-specific integrated circuit, ASIC), an electronic circuit, a processor (for example, a shared processor, a special-purpose processor, or a group processor) configured to execute one or more software or firmware programs, a memory, a merged logic circuit, and/or another suitable component that supports the described function. In an optional example, a person skilled in the art may understand that the apparatus 100 may be specifically the first terminal device in the foregoing embodiments, and may be configured to perform the procedures and/or the steps corresponding to the first terminal device in the foregoing method embodiments. Alternatively, the apparatus 100 may be specifically the second terminal device in the foregoing embodiments, and may be configured to perform the procedures and/or the steps corresponding to the second terminal device in the foregoing method embodiments. To avoid repetition, details are not described herein again.

The apparatus 100 in each of the foregoing solutions has a function of implementing a corresponding step performed by the radio access network device in the foregoing method, or the apparatus 100 in each of the foregoing solutions has a function of implementing a corresponding step performed by the multicast/broadcast session management function network element, the application function network element, or the first network element in the foregoing method. The function may be implemented by hardware, or may be implemented by hardware executing corresponding software. The hardware or software includes one or more modules corresponding to the foregoing function. For example, a transceiver unit may be replaced with a transceiver (where for example, a sending unit in the transceiver unit may be replaced with a transmitter, and a receiving unit in the transceiver unit may be replaced with a receiver), and another unit such as a processing unit may be replaced with a processor, to separately perform receiving and sending operations and a related processing operation in the method embodiments.

In addition, the transceiver unit 110 may alternatively be a transceiver circuit (where for example, the transceiver circuit may include a receiver circuit and a transmitter circuit), and the processing unit may be a processing circuit.

It should be noted that, the apparatus in FIG. 12 may be the network element or the device in the foregoing embodiment, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

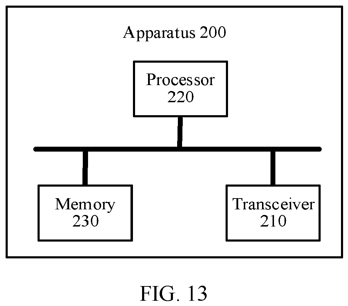

FIG. 13 is a schematic block diagram of a communication apparatus 200 according to an embodiment of this application. As shown in the figure, the apparatus 200 includes at least one processor 220. The processor 220 is coupled to a memory, and is configured to execute instructions stored in the memory, to send a signal and/or receive a signal. Optionally, the device 200 further includes the memory 230, configured to store the instructions. Optionally, the device 200 further includes a transceiver 210, and the processor 220 controls the transceiver 210 to send a signal and/or receive a signal.

It should be understood that the processor 220 and the memory 230 may be integrated into one processing device. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receiver machine) and a transmitter (or referred to as a transmitter machine). The transceiver may further include an antenna. There may be one or more antennas. The transceiver 210 may be a communication interface or an interface circuit.

Specifically, the transceiver 210 in the device 200 may correspond to the transceiver unit 110 in the device 100, and the processor 220 in the device 200 may correspond to the processing unit 120 in the device 200.

In a solution, the apparatus 200 is configured to implement the operations performed by the radio access network device in the foregoing method embodiments.

For example, the processor 220 is configured to execute the computer program or the instructions stored in the memory 230, to implement related operations of the radio access network device in the foregoing method embodiments, for example, the method 100 performed by the radio access network device in the embodiment shown in FIG. 4, or the method performed by the radio access network device in any one of the embodiments shown in FIG. 8A to FIG. 11C.

In another solution, the apparatus 200 is configured to implement the operations performed by each core network element in the foregoing method embodiments.

For example, the processor 220 is configured to execute the computer program or the instructions stored in the memory 230, to implement related operations of the multicast/broadcast session management function network element, the application function network element, and the first network element in the foregoing method embodiments, for example, the method performed by the multicast/broadcast session management function network element, the application function network element, and the first network element in any one of the embodiments shown in FIG. 5 to FIG. 11C.

It should be understood that a specific process in which the transceiver and the processor perform the foregoing corresponding steps is described in detail in the foregoing method embodiments. For brevity, details are not described herein.

In an implementation process, the steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by a combination of hardware and a software module in the processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The foregoing processor may implement or perform the methods, the steps, and logical block diagrams that are disclosed in embodiments of this application. The general-purpose processor may be a microprocessor, or the processor may be any conventional processor, or the like. The steps of the methods disclosed with reference to embodiments of this application may be directly performed and completed by a hardware decoding processor, or may be performed and completed by a combination of hardware and a software module in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the system and method described in this specification includes but is not limited to these and any memory of another proper type.

According to the method provided in embodiments of this application, this application further provides a computer program product. The computer program product stores computer program code. When the computer program code is run on a computer, the computer is enabled to perform the method performed by the radio access network device or the RAN in any one of embodiments of the method 100 and the method 500 to the method 800.

For example, when the computer program code is executed by a computer, the computer is enabled to implement the method performed by the multicast/broadcast session management function network element in the embodiments in the foregoing method 200 and the method 500 to the method 800.

For another example, when the computer program code is executed by a computer, the computer is enabled to implement the method performed by the application function network element in the embodiments in the foregoing method 300 and the method 500 to the method 800.

For still another example, when the computer program code is executed by a computer, the computer is enabled to implement the method performed by the first network element in the embodiments in the foregoing method 400 and the method 500 to the method 800.

According to the method provided in embodiments of this application, this application further provides a computer-readable medium. The computer-readable medium stores program code. When the program code is run on a computer, the computer is enabled to perform the method performed by the radio access network device, the multicast/broadcast session management function network element, the application function network element, or the first network element in the foregoing embodiments.

According to the method provided in embodiments of this application, this application further provides a communication system, including a radio access network device and a first access and mobility management function network element. The radio access network device is configured to perform the method performed by the radio access network device or the RAN in any one of the embodiments in the method 100 and the method 500 to the method 800. The first access and mobility management function network element is configured to send a first message to the radio access network device, where the first message carries an identifier of a first broadcast service, the first message is used for triggering allocation of a resource to the first broadcast service, the radio access network device is shared by at least two networks, the at least two networks include a first network and a second network, and the first access and mobility management function network element is located in the first network.

In an optional implementation, the system further includes a multicast/broadcast session management function network element, and the multicast/broadcast session management function network element is configured to perform the method performed by the multicast/broadcast session management function network element in any one of the embodiments in the method 200 and the method 500 to the method 800.

In an optional implementation, the system further includes an application function network element, and the application function network element is configured to perform the method performed by the application function network element in any one of the embodiments in the method 300 and the method 500 to the method 800.

In an optional implementation, the system further includes a first network element (for example, a central database), and the first network element is configured to perform the method performed by the first network element (for example, the central database) in any one of the embodiments in the method 400 and the method 800.

For explanations and beneficial effects of related content of any one of the apparatuses provided above, refer to the corresponding method embodiment provided above. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a special-purpose computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disc (solid state disc, SSD)), or the like.

In the foregoing apparatus embodiments, a corresponding module or unit performs a corresponding step. For example, a transceiver unit (transceiver) performs a receiving or sending step in the method embodiments, and a processing unit (processor) may perform steps other than the sending and receiving steps. For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, refer to a corresponding process in the foregoing method embodiments, and details are not described herein again.

In the several embodiments provided in this application, it should be understood that the disclosed system, device, and method may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A broadcast communication method, comprising:
receiving, by a radio access network device, a first message from a first access and mobility management function network element, wherein the first message carries an identifier of a first broadcast service, the first message is used for triggering allocation of a resource to the first broadcast service, the radio access network device is shared by at least two networks, the at least two networks comprise a first network and a second network, and the first access and mobility management function network element is located in the first network;
obtaining, by the radio access network device based on the identifier of the first broadcast service, information about a first resource corresponding to the first broadcast service, wherein the first resource is used for sending data of the first broadcast service to a terminal device in the second network; and
sending, by the radio access network device, the data of the first broadcast service to a terminal device in the first network by using the first resource.

2. The method according to claim 1, wherein the identifier of the first broadcast service comprises a first identifier and/or a second identifier, and the first identifier comprises at least one of the following:
a globally unique identifier of the first broadcast service;
an identifier of the first broadcast service in each of the at least two networks; or
a temporary mobile group identity of the first broadcast service, wherein the temporary mobile group identity is shared by the at least two networks; and
the second identifier comprises an identifier of the first broadcast service in the first network.

3. The method according to claim 2, wherein the globally unique identifier of the first broadcast service comprises an internet protocol IP multicast address of the first broadcast service.

4. The method according to claim 2 or 3, wherein when the identifier of the first broadcast service is the globally unique identifier of the first broadcast service, the obtaining, by the radio access network device based on the identifier of the first broadcast service, information about a first resource corresponding to the first broadcast service comprises:
searching, by the radio access network device based on the globally unique identifier of the first broadcast service, for a broadcast session context corresponding to the first broadcast service; and
obtaining, by the radio access network device, the information about the first resource based on the broadcast session context, wherein
the broadcast session context comprises the globally unique identifier of the first broadcast service and the information about the first resource.

5. The method according to claim 2, wherein when the identifier of the first broadcast service is the identifier of the first broadcast service in each of the at least two networks, the obtaining, by the radio access network device based on the identifier of the first broadcast service, information about a first resource corresponding to the first broadcast service comprises:
searching, by the radio access network device based on the identifier of the first broadcast service in each of the at least two networks, for a broadcast session context corresponding to the first broadcast service; and
obtaining, by the radio access network device, the information about the first resource based on the broadcast session context, wherein
the broadcast session context comprises the identifier of the first broadcast service in each of the at least two networks and the information about the first resource.

6. The method according to claim 2, wherein when the identifier of the first broadcast service comprises the second identifier, the obtaining, by the radio access network device based on the identifier of the first broadcast service, information about a first resource corresponding to the first broadcast service comprises:
obtaining, by the radio access network device, an identifier of the first broadcast service in the second network based on the second identifier and a pre-configured correspondence between the identifier of the first broadcast service in the first network and the identifier of the first broadcast service in the second network;
searching, by the radio access network device based on the identifier of the first broadcast service in the second network, for a broadcast session context corresponding to the first broadcast service; and
obtaining, by the radio access network device, the information about the first resource based on the broadcast session context, wherein
the broadcast session context comprises the second identifier and the information about the first resource.

7. The method according to any one of claims 2 to 6, wherein when the identifier of the first broadcast service comprises the first identifier, the method further comprises:
receiving, by the radio access network device, a second message from a second access and mobility management function network element, wherein the second message carries the first identifier, the second message is used for triggering allocation of a resource to the first broadcast service, and the second access and mobility management function network element is located in the second network in the at least two networks;
allocating, by the radio access network device, the first resource to the first broadcast service based on the second message; and
establishing, by the radio access network device, the broadcast session context corresponding to the first broadcast service, wherein
the broadcast session context comprises the first identifier and the information about the first resource.

8. A broadcast communication method, comprising:
receiving, by a multicast/broadcast session management function network element, an identifier of a first broadcast service; and
sending, by the multicast/broadcast session management function network element, the identifier of the first broadcast service to an access and mobility management function network element.

9. The method according to claim 8, wherein the identifier of the first broadcast service comprises a first identifier, and the first identifier comprises at least one of the following:
a globally unique identifier of the first broadcast service;
an identifier of the first broadcast service in each of at least two networks; or
a temporary mobile group identity of the first broadcast service, wherein the temporary mobile group identity is shared by at least two networks.

10. The method according to claim 9, wherein the globally unique identifier of the first broadcast service comprises an internet protocol IP multicast address of the first broadcast service.

11. The method according to any one of claims 8 to 10, wherein the receiving, by a multicast/broadcast session management function network element, an identifier of a first broadcast service comprises:
receiving, by the multicast/broadcast session management function network element, the identifier of the first broadcast service from an application function network element.

12. The method according to claim 11, wherein before the receiving, by the multicast/broadcast session management function network element, the identifier of the first broadcast service from an application function network element, the method further comprises:
receiving, by the multicast/broadcast session management function network element, a third message from the application function network element, wherein the third message carries the identifier of the first broadcast service, and the third message is used for triggering the multicast/broadcast session management function network element to send the temporary mobile group identity of the first broadcast service to the application function network element;
obtaining, by the multicast/broadcast session management function network element, the temporary mobile group identity from a first network element based on the third message; or allocating, by the multicast/broadcast session management function network element, the temporary mobile group identity to the first broadcast service based on the third message; and
sending, by the multicast/broadcast session management function network element, the temporary mobile group identity to the application function network element.

13. The method according to claim 12, wherein the first network element is a unified data management network element, a unified data storage network element, a network repository function network element, a network discovery function network element, a policy control function network element, or a multicast/broadcast database, wherein the multicast/broadcast database is shared by at least two networks.

14. The method according to any one of claims 8 to 10, wherein the receiving, by a multicast/broadcast session management function network element, an identifier of a first broadcast service comprises:
receiving, by the multicast/broadcast session management function network element, the identifier of the first broadcast service from a multicast/broadcast user plane function network element, wherein the identifier of the first broadcast service is the globally unique identifier of the first broadcast service.

15. The method according to claim 14, wherein before the receiving, by the multicast/broadcast session management function network element, the identifier of the first broadcast service from a multicast/broadcast user plane function network element, the method further comprises:
sending, by the multicast/broadcast session management function network element, a fourth message to the multicast/broadcast user plane function network element, wherein the fourth message requests establishment or modification of a session of the first broadcast service, the fourth message carries first indication information, and the first indication information is used for triggering the multicast/broadcast user plane function network element to detect the identifier of the first broadcast service.

16. A broadcast communication method, comprising:
obtaining, by an application function network element, an identifier of a first broadcast service; and
sending, by the application function network element, the identifier of the first broadcast service to a multicast/broadcast session management function network element.

17. The method according to claim 16, wherein the identifier of the first broadcast service comprises a first identifier, and the first identifier comprises at least one of the following:
a globally unique identifier of the first broadcast service;
an identifier of the first broadcast service in each of at least two networks; or
a temporary mobile group identity of the first broadcast service, wherein the temporary mobile group identity is shared by at least two networks.

18. The method according to claim 17, wherein the globally unique identifier of the first broadcast service comprises an internet protocol IP multicast address of the first broadcast service.

19. The method according to claim 17 or 18, wherein the obtaining, by an application function network element, an identifier of a first broadcast service comprises:
generating, by the application function network element, the globally unique identifier of the first broadcast service.

20. The method according to claim 17, wherein the at least two networks comprise a first network and a second network, and the obtaining, by an application function network element, an identifier of a first broadcast service comprises:
receiving, by the application function network element, an identifier of the first broadcast service in the first network from a first multicast/broadcast session management function network element in the first network; and
receiving, by the application function network element, an identifier of the first broadcast service in the second network from a second multicast/broadcast session management function network element in the second network.

21. The method according to claim 17, wherein the obtaining, by an application function network element, an identifier of a first broadcast service comprises:
obtaining, by the application function network element, the temporary mobile group identity from the multicast/broadcast session management function network element.

22. A broadcast communication method, comprising:
receiving, by a first network element, a fifth message from a multicast/broadcast session management function network element, wherein the fifth message carries an identifier of a first broadcast service, and the fifth message is used for triggering the first network element to send a temporary mobile group identity of the first broadcast service; and
sending, by the first network element, the temporary mobile group identity of the first broadcast service to the multicast/broadcast session management function network element based on the fifth message.

23. The method according to claim 22, wherein the method further comprises:
receiving, by the first network element, a correspondence between the identifier of the first broadcast service and the temporary mobile group identity from the multicast/broadcast session management function network element.

24. The method according to claim 22 or 23, wherein the temporary mobile group identity is shared by at least two networks.

25. The method according to any one of claims 22 to 24, wherein the first network element is a unified data management network element, a unified data storage network element, a network repository function network element, a network discovery function network element, a policy control function network element, or a multicast/broadcast database, wherein the multicast/broadcast database is shared by at least two networks.

26. A broadcast communication apparatus, comprising:
a processor, configured to execute a computer program stored in a memory, to enable the apparatus to perform the method according to any one of claims 1 to 25.

27. The apparatus according to claim 27, wherein the apparatus further comprises the memory.

28. A computer-readable storage medium, wherein the computer-readable storage medium stores a computer program; and when the computer program runs on a computer, the computer is enabled to perform the method according to any one of claims 1 to 25.

29. A computer program product, wherein the computer program product comprises instructions for performing the method according to any one of claims 1 to 25.

30. A broadcast communication system, comprising a radio access network device and a first access and mobility management function network element, wherein
the radio access network device is configured to perform the method according to any one of claims 1 to 7; and
the first access and mobility management function network element is configured to send a first message to the radio access network device, wherein the first message carries an identifier of a first broadcast service, and the first message is used for triggering allocation of a resource to the first broadcast service, wherein
the radio access network device is shared by at least two networks, the at least two networks comprise a first network and a second network, and the first access and mobility management function network element is located in the first network.

31. The communication system according to claim 30, wherein the communication system further comprises a multicast/broadcast session management function network element, wherein
the multicast/broadcast session management function network element is configured to perform the method according to any one of claims 8 to 15.

32. The communication system according to claim 30 or 31, wherein the system further comprises an application function network element, wherein
the application function network element is configured to perform the method according to any one of claims 16 to 21.

33. The communication system according to any one of claims 30 to 32, wherein the system further comprises a first network element, wherein
the first network element is configured to perform the method according to any one of claims 22 to 25.
